(19) Europäisches Patentamt
European Patent Office
Office européen des brevets

(11) **EP 4 761 165 A1**

(12) **EUROPEAN PATENT APPLICATION**
published in accordance with Art. 153(4) EPC

(43) Date of publication:
**17.06.2026 Bulletin 2026/25**

(21) Application number: **24853408.3**

(22) Date of filing: **03.07.2024**

(51) International Patent Classification (IPC):
**H04L 5/00** (2006.01)

(52) Cooperative Patent Classification (CPC):
**H04B 1/713; H04L 5/00**

(86) International application number:
**PCT/CN2024/103379**

(87) International publication number:
**WO 2025/035993 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.08.2023 CN 202311017443**

(71) Applicant: **Datang Mobile Communications
Equipment Co., Ltd.
Beijing 100085 (CN)**

(72) Inventors:
• **SHI, Kong
  Beijing 100085 (CN)**
• **HUANG, Qiuping
  Beijing 100085 (CN)**
• **GAO, Qiubin
  Beijing 100085 (CN)**

(74) Representative: **Studio Torta S.p.A.
Via Viotti, 9
10121 Torino (IT)**

(54) **SRS SENDING METHOD AND APPARATUS, TERMINAL, NETWORK SIDE DEVICE, AND STORAGE MEDIUM**

(57) Embodiments of the present disclosure provide an SRS sending method and apparatus, a terminal, a network side device, and a storage medium. The method comprises: receiving configuration information sent by a network side device; on the basis of the configuration information, determining and configuring a subset of comb offset hopping and/or cyclic shift hopping, wherein the subset of comb offset hopping and/or cyclic shift hopping is dedicated to transmission of an SRS using comb offset hopping and/or cyclic shift hopping; and within the subset of comb offset hopping and/or cyclic shift hopping, sending the SRS using comb offset hopping and/or cyclic shift hopping.

Receive configuration information sent by a network device, and determine a comb offset hopping subset and/or a cyclic shift hopping subset according to the configuration information, in which the comb offset hopping subset is dedicated for sending an SRS by adopting comb offset hopping, and the cyclic shift hopping subset is dedicated for sending an SRS by adopting cyclic shift hopping — 200

Send the SRS by adopting comb offset hopping and/or cyclic shift hopping within the comb offset hopping subset and/or the cyclic shift hopping subset — 210

FIG. 2

EP 4 761 165 A1

**Description**

**CROSS-REFERENCE TO RELATED APPLICATIONS**

The application claims the priority of Chinese patent application No. 202311017443.7, filed on August 11, 2023, titled "SRS Sending Method and Apparatus, Terminal, Network Device, and Storage Medium", the entire content of which is incorporated herein by reference.

**TECHNICAL FIELD**

The disclosure relates to a field of communication technologies, in particular to a method for sending an SRS, an apparatus for sending an SRS, a terminal, a network device and a storage medium.

**BACKGROUND**

When selecting resources for different sounding reference signal (SRS) ports, interference and collision should be avoided as much as possible. Interference randomization techniques are introduced, that is, resources occupied by an SRS change over time, thus avoiding continuous interference and collision. In the frequency domain, comb offset hopping method may be adopted, while in the code domain, cyclic shift hopping method may be adopted.

However, comb offset hopping and/or cyclic shift hopping may cause collisions between an SRS supporting comb offset hopping and/or cyclic shift hopping and a general SRS not supporting comb offset hopping and/or cyclic shift hopping, resulting in poor SRS transmission performance.

**SUMMARY**

The embodiments of the disclosure provide a method for sending an SRS, an apparatus for sending an SRS, a terminal, a network device and a storage medium, to improve reduced SRS transmission performance due to collisions that occur in SRS transmission in related arts.

According to a first aspect, the embodiments of the disclosure provide a method for sending an SRS. The method is applied to a terminal, and includes:

receiving configuration information sent by a network device;
determining a comb offset hopping subset and/or a cyclic shift hopping subset according to the configuration information, wherein the comb offset hopping subset is dedicated for sending an SRS by adopting comb offset hopping, and the cyclic shift hopping subset is dedicated for sending an SRS by adopting cyclic shift hopping; and
sending the SRS by adopting comb offset hopping and/or cyclic shift hopping within the comb offset hopping subset and/or the cyclic shift hopping subset.

According to the method for sending the SRS of the embodiment of the disclosure, the configuration information is used to indicate at least one of:

frequency-domain resources in the comb offset hopping subset comprising a portion of all frequency-domain resources in an orthogonal frequency division multiplexing (OFDM) symbol where the SRS is;
cyclic shifts in the cyclic shift hopping subset comprising a portion of all cyclic shifts in an OFDM symbol where the SRS is;
the comb offset hopping subset comprising N frequency-domain resource position(s) in all frequency-domain resources, and N being an integer greater than 0 and less than a total number of frequency-domain positions in the all frequency-domain resources;
the cyclic shift hopping subset comprising M code-domain resource position(s) in all cyclic shifts, and M being an integer greater than 0 and less than a total number of the all cyclic shifts;
the comb offset hopping subset comprising first P frequency-domain resource position(s) in all frequency-domain resources, and P being an integer greater than 0 and less than a total number of the all frequency-domain resources; or
the cyclic shift hopping subset comprising first Q code-domain resource position(s) in all cyclic shifts, and Q being an integer greater than 0 and less than a total number of the all cyclic shifts.

According to the method for sending the SRS of the embodiment of the disclosure, the configuration information is indicated by a radio resource control (RRC) parameter or a high-layer parameter.

According to the method for sending the SRS of the embodiment of the disclosure, sending the SRS within the comb offset hopping subset, includes:

determining a frequency-domain starting position for sending the SRS within the comb offset hopping subset in a case that the terminal adopts comb offset hopping; and
sending the SRS at the frequency-domain starting position.

According to the method for sending the SRS of the embodiment of the disclosure, determining the frequency-domain starting position for sending the SRS within the comb offset hopping subset in a case that the terminal adopts comb offset hopping, includes:

obtaining a comb hopping offset by converting a y-bit binary pseudorandom sequence corresponding to a moment t among SRS sequences into a decimal integer based on an index t of the OFDM symbol where the SRS is among a plurality of radio frames, wherein y is an integer greater than or equal to 8; and
determining the frequency-domain starting position of the SRS based on the configuration information and the comb hopping offset.

According to the method for sending the SRS of the embodiment of the disclosure, obtaining the comb hopping offset by converting the y-bit binary pseudorandom sequence corresponding to the moment t among the SRS sequences into the decimal integer, includes:

calculating the comb hopping offset $k_{comb,\ offset}^{subset}$ based on any one of:

$$k_{comb,\ offset}^{subset} = \left(\sum_{m=0}^{y-1} c(y*t+m)*2^m\right) mod N_{comb}^{subset};$$

$$k_{comb,\ offset}^{subset} = \left(\sum_{m=0}^{y-1} c(y*t+m)*2^m\right) mod K_{TC};$$

and

$$k_{comb,\ offset}^{subset} = \sum_{m=0}^{y-1} c(y*t+m)*2^m;$$

wherein $N_{comb}^{subset}$ represents a number of frequency-domain positions that are occupied by the terminal adopting comb offset hopping; $N_{comb}^{subset} \leq K_{TC}$ ; c(y * t + m) represents the y-bit binary pseudorandom sequence corresponding to the moment t among the SRS sequences; $K_{TC}$ represents a comb value in a case of mapping an SRS resource in the frequency domain; m represents an intermediate quantity used to calculate the comb hopping $k_{comb,\ offset}^{subset}$ ; and m ∈ [0, y-1].

According to the method for sending the SRS of the embodiment of the disclosure, determining the frequency-domain starting position of the SRS based on the configuration information and the comb hopping offset, includes:

obtaining a comb offset $k_{TC}^{(p_i)}$ of an SRS port $P_i$ by calculating based on a comb offset configuration parameter $\bar{k}_{TC}$;

obtaining a frequency-domain position offset $\bar{k}_0^{(p_i)}$ of the SRS port $P_i$ by calculating based on the comb offset $k_{TC}^{(p_i)}$ of the SRS port $P_i$ and the comb hopping offset $k_{comb,\ offset}^{subset}$ ; and

obtaining the frequency-domain starting position of the SRS by calculating based on the $\bar{k}_0^{(p_i)}$ .

According to the method for sending the SRS of the embodiment of the disclosure, obtaining the frequency-domain position offset $\overline{k}_0^{(p_i)}$ of the SRS port $P_i$ by calculating based on the comb offset $k_{TC}^{(p_i)}$ of the SRS port $P_i$ and the comb hopping offset $k_{comb,\ offset}^{subset}$, includes:

obtaining the frequency-domain position offset $\overline{k}_0^{(p_i)}$ of the SRS port $P_i$ by calculating based on any one of:

$$\overline{k}_0^{(p_i)} = n_{shift} N_{sc}^{RB} + s\left(\left(k_{TC}^{(p_i)} + k_{offset}^{l'} + k_{comb,\ offset}^{subset}\right) mod N_{comb}^{subset}\right)\ ;$$

or

$$\overline{k}_0^{(p_i)} = n_{shift} N_{sc}^{RB} + \left(k_{TC}^{(p_i)} + k_{offset}^{l'} + s(k_{comb,\ offset}^{subset})\right) mod N_{comb}^{subset}\ ;$$

wherein $n_{shift}$ represents a preset threshold; $N_{sc}^{RB}$ represents a number of subcarriers per resource block (RB) ; $k_{TC}^{(p_i)} \epsilon [0,\ K_{TC} - 1]$ ; $K_{TC}$ represents a comb value in a case of mapping an SRS resource in the frequency domain; $k_{offset}^{l'}$ represents an offset during SRS positioning; $N_{comb}^{subset}$ represents a number of frequency-domain positions that are occupied by the terminal adopting comb offset hopping; $N_{comb}^{subset} \leq K_{TC}$ ; $s(\cdot)$ is configured by the network device; and $s(\cdot)$ indicates a position to which the comb hopping offset is mapped in a case that the terminal adopts comb offset hopping.

According to the method for sending the SRS of the embodiment of the disclosure, sending the SRS within the cyclic shift hopping subset, includes:

determining a cyclic shift position for sending the SRS within the cyclic shift hopping subset in a case that the terminal adopts cyclic shift hopping; and
sending the SRS at the cyclic shift position.

According to the method for sending the SRS of the embodiment of the disclosure, determining the cyclic shift position for sending the SRS within the cyclic shift hopping subset in a case that the terminal adopts cyclic shift hopping, includes:

obtaining a cyclic shift hopping offset by converting a y-bit binary pseudorandom sequence corresponding to a moment t among SRS sequences into a decimal integer based on an index t of the OFDM symbol where the SRS is among a plurality of radio frames; and
determining the cyclic shift position of the SRS based on the configuration information and the cyclic shift hopping offset.

According to the method for sending the SRS of the embodiment of the disclosure, obtaining the cyclic shift hopping offset by converting the y-bit binary pseudorandom sequence corresponding to the moment t among the SRS sequences into the decimal integer, includes:

calculating the cyclic shift hopping offset $n_{cs,\ offset}^{subset}$ based on any one of:

$$n_{cs,\ offset}^{subset} = \left(\sum_{m=0}^{y-1} c(y*t+m)*2^m\right) mod N_{cs}^{subset};$$

$$n_{cs,\ offset}^{subset} = \left(\sum_{m=0}^{y-1} c(y*t+m)*2^m\right) mod n_{SRS}^{cs,\ max};$$

and

$$n_{cs,\ offset}^{subset} = \sum_{m=0}^{y-1} c(y * t + m) * 2^m;$$

wherein $N_{cs}^{subset}$ represents a number of frequency-domain positions that are occupied by the terminal adopting cyclic shift hopping; $N_{cs}^{subset} \leq n_{SRS}^{cs,\ max}$; $n_{SRS}^{cs,\ max}$ represents a maximum cyclic shift hopping offset; $c(y * t + m)$ represents the y-bit binary pseudorandom sequence corresponding to the moment t among the SRS sequences; m represents an intermediate quantity used to calculate the comb hopping offset $k_{comb,\ offset}^{subset}$; and m $\in$ [0, y-1].

According to the method for sending the SRS of the embodiment of the disclosure, determining the cyclic shift position of the SRS based on the configuration information and the cyclic shift hopping offset, includes:

obtaining a code-domain offset $n_{SRS}^{cs,\ i}$ of an SRS port $P_i$ by calculating based on a cyclic shift configuration parameter $n_{SRS}^{cs}$;

obtaining a cyclic shift $\alpha_i$ by calculating based on the code-domain offset $n_{SRS}^{cs,\ i}$ of the SRS port $P_i$ and the cyclic shift hopping offset $n_{cs,\ offset}^{subset}$; and
determining the cyclic shift position of the SRS based on the cyclic shift $\alpha_i$.

According to the method for sending the SRS of the embodiment of the disclosure, obtaining the cyclic shift $\alpha_i$ by calculating based on the code-domain offset $n_{SRS}^{cs,\ i}$ of the SRS port $P_i$ and the cyclic shift hopping offset $n_{cs,\ offset}^{subset}$, includes:

calculating the cyclic shift $\alpha_i$ based on any one of:

$$\alpha_i = 2\pi \frac{s\left(\left(n_{SRS}^{cs,\ i} + n_{cs,\ offset}^{subset}\right) \mathrm{mod}\ N_{cs}^{subset}\right)}{n_{SRS}^{cs,\ max}};$$

or

$$\alpha_i = 2\pi \frac{\left(n_{SRS}^{cs,\ i} + s(n_{cs,\ offset}^{subset})\right) \mathrm{mod}\ N_{cs}^{subset}}{n_{SRS}^{cs,\ max}};$$

wherein $n_{SRS}^{cs,\ i}$ represents a code-domain offset of the SRS port $P_i$; $n_{SRS}^{cs,\ i} \in \left[0,\ n_{SRS}^{cs,\ max} - 1\right]$; $N_{cs}^{subset}$ represents a number of frequency-domain positions that are occupied by the terminal adopting cyclic shift hopping; $N_{cs}^{subset} \leq n_{SRS}^{cs,\ max}$; $n_{SRS}^{cs,\ max}$ represents a maximum cyclic shift hopping offset; $s(\cdot)$ is configured by the network device; and $s(\cdot)$ indicates a position to which the cyclic shift hopping offset is mapped in a case that the terminal adopts cyclic shift hopping.

According to the method for sending the SRS of the embodiment of the disclosure, in a case that the terminal adopts comb offset hopping, the index t satisfies:

$t$

$$= \begin{cases} \mathrm{mod}(SFN, N)N_{slot}^{frame,\mu}N_{symb}^{slot} + n_{s,f}^{\mu}N_{symb}^{slot} + l_0 + l', & \text{the comb offset hopping is performed every one OFDM symbol} \\ \mathrm{mod}(SFN, N)N_{slot}^{frame,\mu}N_{symb}^{slot} + n_{s,f}^{\mu}N_{symb}^{slot} + l_0 + \left\lfloor \frac{l'}{R} \right\rfloor R, & \text{the comb offset hopping is performed every R OFDM symbols} \end{cases}$$

where *mod(SFN, N)* represents an index of a current radio frame; $N_{\mathrm{slot}}^{\mathrm{frame},\ \mu}$ represents a number of slots in a radio frame; $N_{symb}^{slot}$ represents a number of OFDM symbols in a slot; $N_{\mathrm{slot}}^{\mathrm{frame},\ \mu} N_{symb}^{slot}$ represents a number of OFDM symbols in a radio frame; $n_{s,\ f}^{\mu}$ represents an index of a slot in a radio frame; $N_{symb}^{slot}$ represents a number of OFDM symbols in a slot; $n_{s,\ f}^{\mu} N_{symb}^{slot}$ represents a number of OFDM symbols before a slot occupied by the SRS; $l_0$ represents a starting OFDM symbol position of the SRS within a slot; *l'* represents an index of a current OFDM symbol among OFDM symbols occupied by the SRS; *l'* ∈ [0, a number of OFDM symbols occupied by the SRS-1]; and R represents that the same SRS is sent over R OFDM symbols.

According to the method for sending the SRS of the embodiment of the disclosure, in a case that the terminal adopts cyclic shift hopping, the index t satisfies:

$$\mathrm{t} = \mathrm{mod}(SFN,\ N) N_{\mathrm{slot}}^{\mathrm{frame},\ \mu} N_{symb}^{slot} + n_{s,\ f}^{\mu} N_{symb}^{slot} + l_0 + l';$$

where *mod(SFN, N)* represents an index of a current radio frame; $N_{\mathrm{slot}}^{\mathrm{frame},\ \mu}$ represents a number of slots in a radio frame; $N_{symb}^{slot}$ represents a number of OFDM symbols in a slot; $N_{\mathrm{slot}}^{\mathrm{frame},\ \mu} N_{symb}^{slot}$ represents a number of OFDM symbols in a radio frame; $n_{s,\ f}^{\mu}$ represents an index of a slot in a radio frame; $N_{symb}^{slot}$ represents a number of OFDM symbols in a slot; $n_{s,\ f}^{\mu} N_{symb}^{slot}$ represents a number of OFDM symbols before a slot occupied by the SRS; $l_0$ represents a starting OFDM symbol position of the SRS within a slot; *l'* represents an index of a current OFDM symbol among OFDM symbols occupied by the SRS; and *l'* ∈ [0, a number of OFDM symbols occupied by the SRS-1].

According to a second aspect, the embodiments of the disclosure provide a method for sending an SRS. The method is applied to a network device, and includes:

sending configuration information to a terminal, in which the configuration information is used for the terminal to determine a comb offset hopping subset and/or a cyclic shift hopping subset, the comb offset hopping subset is dedicated for sending an SRS by adopting comb offset hopping, and the cyclic shift hopping subset is dedicated for sending an SRS by adopting cyclic shift hopping.

According to the method for sending the SRS of the embodiment of the disclosure, the configuration information is used to indicate at least one of:

frequency-domain resources in the comb offset hopping subset comprising a portion of all frequency-domain resources in an orthogonal frequency division multiplexing (OFDM) symbol where the SRS is;

cyclic shifts in the cyclic shift hopping subset comprising a portion of all cyclic shifts in an OFDM symbol where the SRS is;

the comb offset hopping subset comprising N frequency-domain resource position(s) in all frequency-domain resources, and N being an integer greater than 0 and less than a total number of frequency-domain positions in the all frequency-domain resources;

the cyclic shift hopping subset comprising M code-domain resource position(s) in all cyclic shifts, and M being an integer greater than 0 and less than a total number of the all cyclic shifts;

the comb offset hopping subset comprising first P frequency-domain resource position(s) in all frequency-domain resources, and P being an integer greater than 0 and less than a total number of the all frequency-domain resources; or

the cyclic shift hopping subset comprising first Q code-domain resource position(s) in all cyclic shifts, and Q being an integer greater than 0 and less than a total number of the all cyclic shifts.

According to the method for sending the SRS of the embodiment of the disclosure, sending the configuration information to the terminal, includes:

indicating the configuration information via an RRC parameter or a high-layer parameter.

According to a third aspect, the embodiments of the disclosure provide a terminal. The terminal includes: a memory, a transceiver and a processor.

The memory is configured to store a computer program, the transceiver is configured to send and receive data under the control of the processor, and the processor is configured to read the computer program from the memory and implement the steps of the method for sending the SRS in the first aspect.

According to a fourth aspect, the embodiments of the disclosure provide a network device. The network device includes: a memory, a transceiver and a processor.

The memory is configured to store a computer program, the transceiver is configured to send and receive data under the control of the processor, and the processor is configured to read the computer program from the memory and implement the steps of the method for sending the SRS in the second aspect.

According to a fifth aspect, the embodiments of the disclosure provide a processor-readable storage medium. The processor-readable storage medium stores a computer program, and the computer program is used to cause a processor to implement the steps of the method for sending the SRS in the first aspect.

According to a sixth aspect, the embodiments of the disclosure provide a processor-readable storage medium. The processor-readable storage medium stores a computer program, and the computer program is used to cause a processor to implement the steps of the method for sending the SRS in the second aspect.

According to a method for sending an SRS, an apparatus, a terminal, a network device and a storage medium provided in the embodiments of the disclosure, the comb offset hopping subset and/or the cyclic shift hopping subset for the SRS may be configured, so that SRS comb offset hopping and cyclic shift hopping are performed within the corresponding respective subsets. The subsets do not include frequency-domain/code-domain resources that are occupied by user equipments (UEs)/SRSs not supporting comb offset hopping and/or cyclic shift hopping, and thus collisions between the SRS supporting comb offset hopping and/or cyclic shift hopping and the legacy SRS not supporting such techniques may be avoided, thereby improving SRS transmission performance.

## BRIEF DESCRIPTION OF THE DRAWINGS

To clearly illustrate the technical solutions in the embodiments of the disclosure or related arts, the drawings used in the embodiments or the related arts are briefly introduced below. Obviously, the following drawings are only some embodiments of the disclosure. For those skilled in the field, other drawings can be obtained based on these drawings without inventive work.

FIG. 1 is a schematic diagram of SRS resource mapping provided by related arts.

FIG. 2 is a schematic flowchart of a method for sending an SRS provided by an embodiment of the disclosure.

FIG. 3 is a schematic flowchart of another method for sending an SRS provided by an embodiment of the disclosure.

FIG. 4 is a schematic structural diagram of a terminal provided by an embodiment of the disclosure.

FIG. 5 is a schematic structural diagram of a network device provided by an embodiment of the disclosure.

FIG. 6 is a schematic structural diagram of an apparatus for sending an SRS provided by an embodiment of the disclosure.

FIG. 7 is a schematic structural diagram of another apparatus for sending an SRS provided by an embodiment of the disclosure.

## DETAILED DESCRIPTION

In the embodiments of the disclosure, the term "and/or" is used to describe relationships between associated objects, and it indicates three types of relationships. For example, "A and/or B" represents the following three relationships: A exists alone, A and B both exist, and B exists alone. Generally, the character "/" indicates that associated objects before and after the character "/" is in an "or" relationship.

In the embodiments of the disclosure, "a plurality of" refers to two or more, which is similar for other quantifiers.

Firstly, the following contents will be introduced.

For each SRS in a communication system, SRS mapping is based on a comb structure in the frequency domain. That is, SRS resource is not mapped on continuous subcarriers but mapped uniformly at an interval of one or several subcarriers. The frequency-domain resource mapped by an SRS port in an SRS resource is determined by a comb value and a comb offset corresponding to that SRS port.

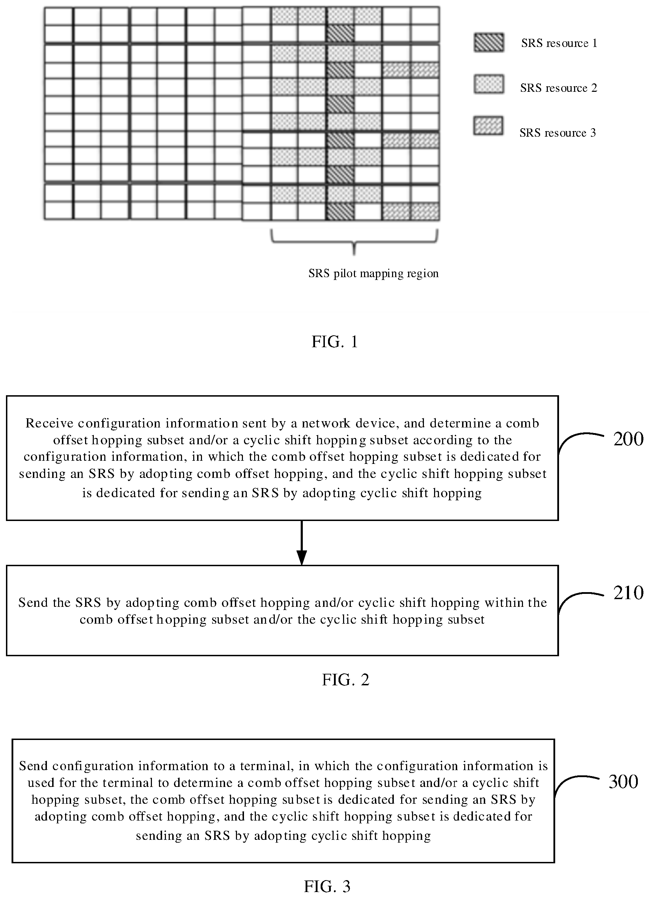

FIG. 1 is a schematic diagram of SRS resource mapping provided by related arts. For example, When comb=2, the frequency-domain resource mapped by the SRS port is in a comb structure at an interval of one subcarrier, with two mappable comb offsets, i.e., SRS resource 1 and SRS resource 2 as shown in FIG. 1. When comb=4, the frequency-domain resource mapped by the SRS port is in a comb structure at an interval of three subcarriers, with four mappable comb offsets, i.e., SRS resource 3 as shown in FIG. 1. Different ports in the same SRS resource may have different comb offsets. For example, when comb=2, for the SRS resource, some ports occupy the frequency-domain position with comb offset "0," while other ports map it at the frequency-domain position with comb offset "1."

When selecting resources for different SRS ports, interference and collision should be avoided, especially in scenarios like densely populated cells, and cells located in close proximity. When a terminal is located at an edge of a cell, it is highly susceptible to interference from other cells, and thus it is necessary to allocate different resources for terminals in different cells. If there is collision between SRS resources of two terminals and their allocated SRS resources remain unchanged, continuous interference will develop over time, severely compromising communication quality.

To avoid interference and collisions, interference randomization techniques may be introduced, and thus resources occupied by SRS change over time, thereby preventing continuous interference and collision.

In the frequency domain, in a comb offset hopping method, the comb offset is obtained by generating a decimal integer based on an 8-bit binary pseudorandom sequence (which is a 31-bit Gold sequence). For a given SRS port, the comb offset it is mapped to is a time-associated function.

For example, for an SRS resource with comb=2, it uses comb offset 0 on a first OFDM symbol and pseudo-randomly hops to either comb offset 0 or 1 on a second OFDM symbol. Therefore, comb offset hopping realizes interference randomization in the frequency domain by randomly hopping in the frequency domain.

In the code domain, cyclic shift hopping method may be adopted, and cyclic shift is pseudo-randomly determined over time, and thus interference randomization in the code domain is realized.

The embodiments of the disclosure provide a method for sending an SRS, an apparatus for sending an SRS, a terminal, a network device and a storage medium, to prevent collisions between the SRS supporting comb offset hopping and/or cyclic shift hopping and the legacy SRS not supporting comb offset hopping and/or cyclic shift hopping, thereby improving SRS transmission performance.

The method and the apparatus are based on the same application concept. Since the principles by which the method and the apparatus solve problems are similar, the implementations of the apparatus and the method may be cross-referenced, and the repeated contents will not be described herein again.

The technical solutions of the embodiments of the disclosure will be described in detail with reference to the accompanying drawings. Obviously, the embodiments described below are only part of the embodiments of the disclosure, not all of them. Based on the embodiments of the disclosure, other embodiments obtained by those skilled in the art without inventive works all fall into the scope of protection of the disclosure.

The technical solution provided by the embodiments of the disclosure is applicable to various systems, in particular to 5G systems. For example, the applicable systems include a global system of mobile communication (GSM) system, a code division multiple access (CDMA) system, a wideband code division multiple access (WCDMA), a general packet radio service (GPRS) system, a long term evolution (LTE) system, an LTE frequency division duplex (FDD) system, an LTE time division duplex (TDD) system, an LTE-advanced (LTE-A) system, an universal mobile telecommunication system (UMTS), a worldwide interoperability for microwave access (WiMAX) system, and a 5G new radio (NR) system. Each of these systems includes a terminal and a network device. The system may also include a core network portion, such as an evolved packet system (EPS), a 5G system (5GS), etc.

FIG. 2 is a schematic flowchart of a method for sending an SRS provided by an embodiment of the disclosure. As illustrated in FIG. 2, the method for sending the SRS is applied to a terminal, i.e., an execution entity of the method is the terminal. The method includes the following steps.

At step 200, configuration information sent by a network device is received, and a comb offset hopping subset and/or a cyclic shift hopping subset may be determined according to the configuration information, in which the comb offset hopping subset is dedicated for sending an SRS by adopting comb offset hopping, and the cyclic shift hopping subset is dedicated for sending an SRS by adopting cyclic shift hopping.

The network device may be a base station that provides services to the terminal.

In detail, the network device sends the configuration information to the terminal to configure the comb offset hopping subset and/or the cyclic shift hopping subset, and the terminal determines the comb offset hopping subset and/or the cyclic shift hopping subset based on the configuration information.

The comb offset hopping subset is used to restrict values to hop to for comb offset hopping. The subset does not include frequency-domain resources that are occupied by any terminal/SRS that does not support comb offset hopping.

The cyclic shift hopping subset is used to restrict values to hop to for cyclic shift hopping. The subset does not include code-domain resources that are occupied by any terminal/SRS that does not support cyclic shift hopping.

At step 210, the SRS by adopting comb offset hopping and/or cyclic shift hopping is sent within the comb offset hopping subset and/or the cyclic shift hopping subset.

The terminal may determine the comb offset hopping subset based on the configuration information, determine transmission resources for the SRS by adopting comb offset hopping within the comb offset hopping subset and then send the SRS.

The terminal may also determine the cyclic shift hopping subset based on the configuration information, determine transmission resources for the SRS by adopting cyclic shift hopping within the cyclic shift hopping subset and then send the SRS.

In detail, some terminals support comb offset hopping/cyclic shift hopping, while others do not support comb offset hopping/cyclic shift hopping or similar techniques. When these two kinds of terminals are reused, collisions between the SRS supporting comb offset hopping and/or cyclic shift hopping and the legacy SRS not supporting comb offset hopping and/or cyclic shift hopping may occur during comb offset hopping and/or cyclic shift hopping. For example, when the terminal adopts comb offset hopping, there is a chance that it may occupy the same frequency-domain resources as terminals not supporting comb offset hopping due to frequency resource hopping.

To prevent this scenario, different resources are allocated to terminals adopting comb offset hopping and terminals not adopting comb offset hopping, respectively. That is, the terminals not adopting comb offset hopping occupy a subset of comb offsets, while the terminals adopting comb offset hopping occupy the remaining comb offsets. The network device may configure a comb offset hopping subset for the terminals/SRSs adopting comb offset hopping, so as to restrict the value to hop to during comb offset hopping within the comb offset hopping subset. The subset does not include frequency-domain resources that are occupied by terminals/SRSs not supporting comb offset hopping.

For example, when comb=4, if a terminal not adopting comb offset hopping occupies comb offset 0, then a terminal adopting comb offset hopping can only hop on comb offsets 1, 2 and 3, or a subset thereof, and the specific configuration of comb offset in such case is based on the base station.

For example, a terminal adopting cyclic shift hopping may occupy the same cyclic shift as a terminal not adopting cyclic shift hopping. To prevent this, it is limited that the terminal adopting cyclic shift hopping and the terminal not adopting cyclic shift hopping shall occupy different cyclic shifts. That is, the terminal not adopting cyclic shift hopping occupies a subset of cyclic shifts, while the terminal adopting cyclic shift hopping occupies the remaining cyclic shifts. The network device may configure a cyclic shift hopping subset for terminals/SRSs adopting cyclic shift hopping, so as to restrict the value to hop to during cyclic shift hopping within the cyclic shift hopping subset. The subset does not include code-domain resources that are occupied by terminals/SRSs not supporting cyclic shift hopping.

For example, for a terminal with the maximum cyclic shift value of 6, if a terminal not adopting cyclic shift hopping occupies cyclic shifts 0 and 1, then a terminal adopting cyclic shift hopping can only hop on cyclic shifts 2, 3, 4 and 5, or a subset thereof, and the specific configuration of cyclic shift in such case is based on the base station.

The embodiments of the disclosure realize resource reuse by avoiding collisions with legacy terminals (e.g., terminals that do not adopt comb offset hopping and/or cyclic shift hopping) when starting SRS comb offset hopping and/or cyclic shift hopping.

According to the method for sending the SRS provided in the embodiments of the disclosure, the comb offset hopping subset and/or the cyclic shift hopping subset for the SRS may be configured, so that comb offset hopping and cyclic shift hopping for the SRS are limited to the corresponding respective subsets. The subsets do not include frequency-domain/code-domain resources that are occupied by UEs/SRSs not supporting comb offset hopping and/or cyclic shift hopping, and thus collisions between the SRS supporting comb offset hopping and/or cyclic shift hopping and the legacy SRS not supporting such techniques may be avoided, thereby improving SRS transmission performance.

The configuration information is used to indicate at least one of the following:

frequency-domain resources in the comb offset hopping subset including a portion of all frequency-domain resources in an OFDM symbol where the SRS is;

cyclic shifts in the cyclic shift hopping subset including a portion of all cyclic shifts in an OFDM symbol where the SRS is;

the comb offset hopping subset including N frequency-domain resource position(s) in all frequency-domain resources, and N being an integer greater than 0 and less than a total number of frequency-domain positions in all the frequency-domain resources;

the cyclic shift hopping subset including M code-domain resource position(s) in all cyclic shifts, and M being an integer greater than 0 and less than a total number of cyclic shifts;

the comb offset hopping subset including the first P frequency-domain resource position(s) in all frequency-domain resources, and P being an integer greater than 0 and less than a total number of frequency-domain positions of all frequency-domain resources; or

the cyclic shift hopping subset including the first Q code-domain resource position(s) in all cyclic shifts, and Q being an integer greater than 0 and less than a total number of cyclic shifts.

The configuration information may indicate a comb offset that is occupied by a terminal adopting comb offset hopping.

For example, the configuration information may indicate that frequency-domain resources in the comb offset hopping subset include a portion of all frequency-domain resources in an OFDM symbol where the SRS is. That is, the terminal adopting comb offset hopping may occupy a fixed number of comb offsets that is a part of all comb offsets. For example, the terminal adopting comb offset hopping may occupy 1/2 or 1/2±a of a total number of comb offsets, and a is an integer greater than or equal to 0 and less than half the total number of comb offsets.

For example, the configuration information may indicate that the comb offset hopping subset includes N frequency-domain resource position(s) in all frequency-domain resources. That is, a number of resources occupied by the terminal adopting comb offset hopping is flexibly configured by the base station. For example, the terminal adopting comb offset hopping may randomly select N comb offsets to occupy, while terminals not adopting comb offset hopping may occupy the remaining comb offsets.

For example, the configuration information may indicate that the comb offset hopping subset includes the first P frequency-domain resource position(s) in all frequency-domain resources. That is, a number of resources occupied by the terminal adopting comb offset hopping is flexibly configured by the base station. For example, the terminal adopting comb offset hopping may occupy the first P continuous comb offsets, while terminals not adopting comb offset hopping may occupy the remaining comb offsets.

The configuration information may also indicate a cyclic shift that is occupied by a terminal adopting cyclic shift hopping.

For example, the configuration information may indicate that cyclic shifts in the cyclic shift hopping subset include a portion of all cyclic shifts in an OFDM symbol where the SRS is. That is, the terminal adopting cyclic shift hopping may occupy a fixed number of cyclic shifts that are a part of all cyclic shifts. For example, the terminal adopting cyclic shift hopping may occupy 1/2 or 1/2±b of a total number of cyclic shifts, and b is an integer greater than or equal to 0 and less than half the total number of cyclic shifts.

For example, the configuration information may indicate that the cyclic shift hopping subset includes the first Q code-domain resource position(s) in all cyclic shifts. That is, a number of resources occupied by the terminal adopting cyclic shift hopping is flexibly configured by the base station. For example, the terminal adopting cyclic shift hopping may occupy the first Q continuous cyclic shifts, while terminals not adopting cyclic shift hopping may occupy the remaining cyclic shifts.

For example, the configuration information may indicate that the cyclic shift hopping subset includes M code-domain resource position(s) in all cyclic shifts. That is, a number of resources occupied by the terminal adopting cyclic shift hopping is flexibly configured by the base station. For example, the terminal adopting cyclic shift hopping may randomly select M cyclic shifts, while terminals not adopting cyclic shift hopping may occupy the remaining cyclic shifts.

The configuration information is specifically used to indicate one or more of the following:

(a) frequency-domain resources in the comb offset hopping subset including a portion of all frequency-domain resources in an OFDM symbol where the SRS is;

(b) cyclic shifts in the cyclic shift hopping subset including a portion of all cyclic shifts in an OFDM symbol where the SRS is;

(c) the comb offset hopping subset including N frequency-domain resource position(s) in all frequency-domain resources, and N being an integer greater than 0 and less than a total number of frequency-domain positions in all the frequency-domain resources;

(d) the cyclic shift hopping subset including M code-domain resource position(s) in all cyclic shifts, and M being an integer greater than 0 and less than a total number of cyclic shifts;

(e) the comb offset hopping subset including the first P frequency-domain resource position(s) in all frequency-domain resources, and P being an integer greater than 0 and less than a total number of frequency-domain positions in all the frequency-domain resources; and

(f) the cyclic shift hopping subset including the first Q code-domain resource position(s) in all cyclic shifts, and Q being an integer greater than 0 and less than a total number of cyclic shifts.

The configuration information may indicate (a)+(c), (a)+(e), (c)+(e), or (a)+(c)+(e), and the terminal may determine the comb offset hopping subset based on the contents of (a)+(c), (a)+(e), or (c)+(e), or may select one of the indicated items to determine the comb offset hopping subset.

The configuration information may also indicate (b)+(d), (b)+(f), (d)+(f), or (b)+(d)+(f), and the terminal may determine the cyclic shift hopping subset based on the contents of (b)+(d), (b)+(f), or (d)+(f), or may select one of the indicated items to determine the cyclic shift hopping subset.

The configuration information may indicate any combination of (a)-(f), and the terminal may determine the comb offset hopping subset and/or the cyclic shift hopping subset based on the contents of the indicated items, or select one or two items from the indicated items to determine the comb offset hopping subset and/or the cyclic shift hopping subset. Further examples are omitted here.

For example, the configuration information may indicate a comb offset that is occupied by a terminal adopting comb offset hopping and a cyclic shift that is occupied by a terminal adopting cyclic shift hopping.

Optionally, the configuration information may indicate that a terminal adopting comb offset hopping may occupy a fixed number of comb offsets, and a terminal adopting cyclic shift hopping may occupy a fixed number of cyclic shifts. For example, the terminal adopting comb offset hopping may occupy 1/2 or 1/2±a of a total number of comb offsets (a is an integer greater than or equal to 0 and less than half the total number of comb offsets), and the terminal adopting cyclic shift hopping may occupy 1/2 or 1/2±b of a total number of cyclic shifts (b is an integer greater than or equal to 0 and less than half the total number of cyclic shifts).

Optionally, the configuration information may indicate that a number of resources occupied by a terminal adopting comb offset hopping is flexibly configured by the base station, and a number of cyclic shifts occupied by a terminal adopting cyclic shift hopping includes a fixed number of cyclic shifts. For example, the terminal adopting comb offset hopping may randomly select N comb offsets to occupy, while terminals not adopting comb offset hopping may occupy the remaining comb offsets, and the terminal adopting cyclic shift hopping may occupy 1/2 or 1/2±b of a total number of cyclic shifts (b is an integer greater than or equal to 0 and less than half the total number of cyclic shifts), while the terminal not adopting cyclic shift hopping may occupy the remaining cyclic shifts.

Optionally, the configuration information may indicate that a number of resources occupied by a terminal adopting comb offset hopping is flexibly configured by the base station, and a number of cyclic shifts occupied by a terminal adopting cyclic shift hopping includes a fixed number of cyclic shifts. For example, the terminal adopting comb offset hopping may occupy the first P continuous comb offset(s), while terminals not adopting comb offset hopping may occupy the remaining comb offsets, and the terminal adopting cyclic shift hopping may occupy 1/2 or 1/2±b of a total number of cyclic shifts (b is an integer greater than or equal to 0 and less than half the total number of cyclic shifts), while the terminal not adopting cyclic shift hopping may occupy the remaining cyclic shifts.

Optionally, the configuration information may indicate that a terminal adopting comb offset hopping may occupy a fixed number of comb offsets, and a number of resources occupied by a terminal adopting cyclic shift hopping is flexibly configured by the base station. For example, the terminal adopting comb offset hopping may occupy 1/2 or 1/2±a of a total number of comb offsets (a is an integer greater than or equal to 0 and less than half the total number of comb offsets), while terminals not adopting comb offset hopping may occupy the remaining comb offsets, and the terminal adopting cyclic shift hopping may occupy the first Q continuous cyclic shifts, while the terminal not adopting cyclic shift hopping may occupy the remaining cyclic shifts.

Optionally, the configuration information may indicate that a number of resources occupied by a terminal adopting comb offset hopping and a number of resources occupied by a terminal adopting cyclic shift hopping are flexibly configured by the base station. For example, the terminal adopting comb offset hopping may randomly select N comb offsets to occupy, while terminals not adopting comb offset hopping may occupy the remaining comb offsets, and the terminal adopting cyclic shift hopping may occupy the first Q continuous cyclic shifts, while the terminal not adopting cyclic shift hopping may occupy the remaining cyclic shifts.

Optionally, the configuration information may indicate that a number of resources occupied by a terminal adopting comb offset hopping and a number of resources occupied by a terminal adopting cyclic shift hopping are flexibly configured by the base station. For example, the terminal adopting comb offset hopping may occupy the first P continuous comb offset(s), while terminals not adopting comb offset hopping may occupy the remaining comb offsets, and the terminal adopting cyclic shift hopping may occupy the first Q continuous cyclic shifts, while the terminal not adopting cyclic shift hopping may occupy the remaining cyclic shifts. As another example, the cyclic shift hopping subset includes the first three cyclic shifts, while the comb offset hopping subset includes the first four frequency-domain positions.

Optionally, the configuration information may indicate that a terminal adopting comb offset hopping may occupy a fixed number of comb offsets, and a number of resources occupied by a terminal adopting cyclic shift hopping is flexibly configured by the base station. For example, the terminal adopting comb offset hopping may occupy 1/2 or 1/2±a of a total number of comb offsets (a is an integer greater than or equal to 0 and less than half the total number of comb offsets), while terminals not adopting comb offset hopping may occupy the remaining comb offsets, and the terminal adopting cyclic shift hopping may randomly select M cyclic shifts, while the terminal not adopting cyclic shift hopping may occupy the remaining cyclic shifts.

Optionally, the configuration information may indicate that a number of resources occupied by a terminal adopting comb offset hopping and a number of resources occupied by a terminal adopting cyclic shift hopping are flexibly configured by the base station. For example, the terminal adopting comb offset hopping may randomly select N comb offset(s), while terminals not adopting comb offset hopping may occupy the remaining comb offsets, and the terminal adopting cyclic shift hopping may randomly select M cyclic shifts, while the terminal not adopting cyclic shift hopping may occupy the remaining cyclic shifts.

Optionally, the configuration information may indicate that a number of resources occupied by a terminal adopting comb offset hopping and a number of resources occupied by a terminal adopting cyclic shift hopping are flexibly configured by the base station. For example, the terminal adopting comb offset hopping may occupy the first P continuous comb offset(s), while terminals not adopting comb offset hopping may occupy the remaining comb offsets, and the terminal adopting cyclic shift hopping may randomly select M cyclic shifts, while the terminal not adopting cyclic shift hopping may occupy the remaining cyclic shifts. The configuration information is indicated by a radio resource control (RRC) parameter or a high-layer parameter.

The method further includes:

determining a comb offset configuration parameter $\overline{k}_{TC}$ or a cyclic shift configuration parameter $n_{SRS}^{cs}$ based on a high-layer parameter.

The configuration information may be indicated by an RRC parameter or a high-layer parameter. If the RRC parameter is used to indicate the configuration information, the RRC parameter configures the comb offset hopping subset and/or the cyclic shift hopping subset, and the high-layer parameter indicates the comb offset configuration parameter $\overline{k}_{TC}$ or the cyclic shift configuration parameter $n_{SRS}^{cs}$. Or, if the high-layer parameter is used to indicate the configuration information, the high-layer parameter configures the comb offset hopping subset and/or the cyclic shift hopping subset, because the high-layer parameter shall indicate the comb offset configuration parameter $\overline{k}_{TC}$ or the cyclic shift configuration parameter $n_{SRS}^{cs}$, it indicates the comb offset configuration parameter $\overline{k}_{TC}$ or the cyclic shift configuration parameter $n_{SRS}^{cs}$ together with the comb offset hopping subset and/or the cyclic shift hopping subset.

The high-layer parameter may indicate the comb offset configuration parameter $\overline{k}_{TC}$ while configuring the comb offset hopping subset.

The high-layer parameter may also indicate the cyclic shift configuration parameter $n_{SRS}^{cs}$ while configuring the cyclic shift hopping subset.

Or, the high-layer parameter may indicate the comb offset configuration parameter $\overline{k}_{TC}$ and the cyclic shift configuration parameter $n_{SRS}^{cs}$ while configuring the comb offset hopping subset and the cyclic shift hopping subset.

In an embodiment, the network device may use a new RRC parameter to configure a comb offset hopping subset. The RRC parameter uses one or more decimal integers to indicate a comb offset that is occupied by a terminal adopting comb offset hopping.

In an embodiment, the network device may explicitly configure the comb offset through *combOffset* in a high-layer parameter: *transmissionComb*. The *combOffset* contains a plurality of decimal integers, in which the first decimal integer may be used to indicate the $\overline{k}_{TC}$, a set of the following decimal integers may indicate a comb offset that is occupied by a terminal adopting comb offset hopping, and $\overline{k}_{TC} \in \{0, 1, \dots, K_{TC} - 1\}$.

In an embodiment, the network device may use a new RRC parameter to configure a subset. The RRC parameter uses one or more integers to indicate a cyclic shift that is occupied by a terminal adopting cyclic shift hopping.

In an embodiment, the network device may explicitly configure the cyclic shift through *cyclicShift* in a high-layer parameter: *transmission Comb.* The *cyclicShift* contains a plurality of integers. The first integer may be used to indicate the $n_{SRS}^{cs}$, a set of the following integers may indicate a cyclic shift that is occupied by a terminal adopting cyclic shift hopping, and $n_{SRS}^{cs} \in \left\{0, \ 1, \ \dots, \ n_{SRS}^{cs, \ max} - 1\right\}$.

In an embodiment, sending the SRS within the comb offset hopping subset, includes:

determining a frequency-domain starting position for sending the SRS within the comb offset hopping subset when the terminal adopts comb offset hopping; and
sending the SRS at the frequency-domain starting position.

In detail, after the comb offset hopping subset is determined based on the configuration information, the terminal determines that SRS frequency hopping can be achieved within this subset, determines a comb hopping offset of an SRS adopting comb offset hopping based on the comb offset configuration parameter $\overline{k}_{TC}$, and determines a frequency-domain starting position for sending the SRS within the comb offset hopping subset and then sends the SRS at the frequency-domain starting position.

The comb offset configuration parameter $\overline{k}_{TC}$ is indicated by a high-layer parameter or predefined by a protocol.

In an embodiment, determining the frequency-domain starting position for sending the SRS within the comb offset hopping subset when the terminal adopts comb offset hopping, includes:

obtaining a comb hopping offset by converting a y-bit binary pseudorandom sequence corresponding to a moment t among SRS sequences into a decimal integer based on an index t of the OFDM symbol where the SRS is among a plurality of radio frames, in which y is an integer greater than or equal to 8; and
determining the frequency-domain starting position of the SRS based on the configuration information and the comb hopping offset.

In detail, to determine the frequency-domain starting position for sending the SRS when the terminal adopts comb offset hopping, the index t of the OFDM symbol where the SRS is among the plurality of radio frames is first determined, the y-bit binary pseudorandom sequence corresponding to the moment t among the SRS sequences is converted into the decimal integer to obtain the comb hopping offset, and the frequency-domain starting position of the SRS is calculated based on the comb hopping offset.

For example, firstly, an index t of an OFDM symbol where an SRS is among a plurality of radio frames is determined, then a 8-bit binary pseudorandom sequence *c(i)* corresponding to the moment t among SRS sequences is converted into a decimal integer to indicate a comb offset to hop to at the current OFDM symbol t.

It should be noted that for the next OFDM symbol t', the above processes are repeated. That is, the 8-bit binary pseudorandom sequence *c(i)* corresponding to the moment *t* among the SRS sequences is converted into the decimal integer to indicate a comb offset to hop to at the OFDM symbol t, and the frequency-domain position occupied by the SRS at the OFDM symbol t' is further determined.

In an embodiment, obtaining the comb hopping offset by converting the y-bit binary pseudorandom sequence corresponding to the moment t among the SRS sequences into the decimal integer, includes:

obtaining the comb hopping offset $k_{comb,\ offset}^{subset}$ by calculating based on any one of the following equations (1)-(3):

$$k_{comb,\ offset}^{subset} = \left(\sum_{m=0}^{y-1} c(y * t + m) * 2^m\right) mod N_{comb}^{subset} \quad (1);$$

$$k_{comb,\ offset}^{subset} = \left(\sum_{m=0}^{y-1} c(y * t + m) * 2^m\right) mod\ K_{TC} \quad (2);$$

and

$$k_{comb,\ offset}^{subset} = \sum_{m=0}^{y-1} c(y * t + m) * 2^m \quad (3);$$

where $N_{comb}^{subset}$ represents a number of frequency-domain positions that are occupied by the terminal adopting comb offset hopping; $N_{comb}^{subset} \leq K_{TC}$ ; *c(y * t + m)* represents the y-bit binary pseudorandom sequence corresponding to the moment t among the SRS sequences; $K_{TC}$ represents a comb value when mapping an SRS resource in the frequency domain; m represents an intermediate quantity used to calculate the comb hopping offset $k_{comb,\ offset}^{subset}$ ; and m ∈ [0, y-1].

In detail, the terminal may calculate the comb hopping offset $k_{comb,\ offset}^{subset}$ of the current OFDM symbol t.

The terminal may calculate the $k_{comb,\ offset}^{subset}$ using different methods based on whether the SRS adopts comb offset hopping.

For example, for a terminal adopting comb offset hopping, the comb hopping offset $k_{comb,\ offset}^{subset}$ is calculated based on the following equation (4):

$$k_{comb,\ offset}^{subset} = \left(\sum_{m=0}^{7} c(8 * t + m) * 2^m\right) mod N_{comb}^{subset} (4).$$

For example, for a terminal adopting comb offset hopping, the comb hopping offset $k_{comb,\ offset}^{subset}$ is calculated based on the following equation (5):

$$k^{subset}_{comb,\ offset} = \left(\sum_{m=0}^{7} c(8*t+m)*2^m\right) mod\ K_{TC}\quad (5).$$

For example, for a terminal adopting comb offset hopping, the comb hopping offset $k^{subset}_{comb,\ offset}$ is calculated based on the following equation (6):

$$k^{subset}_{comb,\ offset} = \sum_{m=0}^{7} c(8*t+m)*2^m\quad (6).$$

For example, for a terminal not adopting comb offset hopping, the comb hopping offset $k^{subset}_{comb,\ offset}=0$.

In the above equations, $t$ represents an index $t$ of an OFDM symbol where an SRS is among a plurality of radio frames, and the index t satisfies:

$$t = \begin{cases} mod(SFN,N)N^{frame,\mu}_{slot}N^{slot}_{symb}+n^{\mu}_{s,f}N^{slot}_{symb} + l_0 + l', & \text{the comb offset hopping is performed every one OFDM symbol} \\ mod(SFN,N)N^{frame,\mu}_{slot}N^{slot}_{symb}+n^{\mu}_{s,f}N^{slot}_{symb} + l_0 + \left\lfloor \dfrac{l'}{R} \right\rfloor R, & \text{the comb offset hopping is performed every R OFDM symbols} \end{cases}$$

where $mod(SFN, N)$ represents an index of a current radio frame; $N^{frame,\ \mu}_{slot}$ represents a number of slots in a radio frame; $N^{slot}_{symb}$ represents a number of OFDM symbols in a slot; $N^{frame,\ \mu}_{slot}N^{slot}_{symb}$ represents a number of OFDM symbols in a radio frame; $n^{\mu}_{s,\ f}$ represents an index of a slot in a radio frame; $N^{slot}_{symb}$ represents a number of OFDM symbols in a slot; $n^{\mu}_{s,\ f}N^{slot}_{symb}$ represents a number of OFDM symbols before a slot occupied by the SRS; $l_0$ represents a starting OFDM symbol position of the SRS within a slot; $l'$ represents an index of a current OFDM symbol among OFDM symbols occupied by the SRS; $l' \in$ [0, a number of OFDM symbols occupied by the SRS-1]; and R represents that the same SRS is sent over R OFDM symbols.

In an embodiment, determining the frequency-domain starting position of the SRS based on the configuration information and the comb hopping offset, includes:

obtaining a comb offset $k^{(p_i)}_{TC}$ of an SRS port $P_i$ by calculating based on a comb offset configuration parameter $\overline{k}_{TC}$;

calculating a frequency-domain position offset $\overline{k}^{(p_i)}_0$ of the SRS port $P_i$ based on the comb offset $k^{(p_i)}_{TC}$ of the SRS port $P_i$ and the comb hopping offset $k^{subset}_{comb,\ offset}$; and

calculating the frequency-domain starting position of the SRS based on the $\overline{k}^{(p_i)}_0$.

In detail, for the SRS port $P_i$, the base station configures the comb offset configuration parameter $\overline{k}_{TC}$ corresponding to the SRS port $P_i$ according to the *combOffset* in the parameter *transmission Comb,* then calculates the comb offset $k^{(p_i)}_{TC}$ of an SRS port $P_i$ based on the comb offset configuration parameter $\overline{k}_{TC}$ corresponding to the SRS port $P_i$ using the following equation (7):

$$k_{\mathrm{TC}}^{(p_i)} =$$

$$\begin{cases} (\overline{k}_{\mathrm{TC}} + K_{\mathrm{TC}}/2) \bmod K_{\mathrm{TC}} & \text{if } N_{\mathrm{ap}}^{\mathrm{SRS}} = 4, \quad p_i \in \{1001, \ 1003\}, \quad \text{and } n_{\mathrm{SRS}}^{\mathrm{cs,\ max}} = 6 \\ (\overline{k}_{\mathrm{TC}} + K_{\mathrm{TC}}/2) \bmod K_{\mathrm{TC}} & \text{if } N_{\mathrm{ap}}^{\mathrm{SRS}} = 4, \quad p_i \in \{1001, \ 1003\}, \quad \text{and } n_{\mathrm{SRS}}^{\mathrm{cs}} \in \{n_{\mathrm{SRS}}^{\mathrm{cs,\ max}}/2, \ \ldots, \ n_{\mathrm{SRS}}^{\mathrm{cs,\ max}} - 1\} \\ \overline{k}_{\mathrm{TC}} & \text{otherwise} \end{cases}$$

$$(7)$$

After the comb offset $k_{\mathrm{TC}}^{(p_i)}$ of the SRS port $P_i$ is calculated, the frequency-domain position offset $\overline{k}_0^{(p_i)}$ of the SRS port $P_i$ is calculated based on the comb offset $k_{\mathrm{TC}}^{(p_i)}$ of the SRS port $P_i$ and the comb hopping offset $k_{comb,\ offset}^{subset}$, and the frequency-domain starting position of the SRS is calculated based on the frequency-domain position offset $\overline{k}_0^{(p_i)}$.

When calculating the frequency-domain starting position of the SRS based on the frequency-domain position offset $\overline{k}_0^{(p_i)}$, the frequency-domain starting position $k_0^{(p_i)}$ of the SRS is calculated through the following equation (8):

$$k_0^{(p_i)} = \overline{k}_0^{(p_i)} + n_{offset}^{FH} + n_{offset}^{RPFS};\qquad\qquad (8);$$

where

$$n_{offset}^{FH} = \Sigma_{b=0}^{B_{SRS}} m_{SRS,\ b} N_{sc}^{RB} n_b \ ;$$

and

$$n_{offset}^{RPFS} = N_{sc}^{RB} m_{SRS,\ B_{SRS}} \left( (k_F + k_{hop}) \bmod P_F \right)/P_F.$$

In an embodiment, calculating the frequency-domain position offset $\overline{k}_0^{(p_i)}$ of the SRS port $P_i$ based on the comb offset $k_{\mathrm{TC}}^{(p_i)}$ of the SRS port $P_i$ and the comb hopping offset $k_{comb,\ offset}^{subset}$, includes: *comb, offset'*

obtaining the frequency-domain position offset $\overline{k}_0^{(p_i)}$ of the SRS port $P_i$ by calculating based on equation (9) or (10):

$$\overline{k}_0^{(p_i)} = n_{shift} N_{sc}^{RB} + s\left( \left( k_{TC}^{(p_i)} + k_{offset}^{l'} + k_{comb,\ offset}^{subset} \right) \bmod N_{comb}^{subset} \right) \ (9);$$

or

$$\overline{k}_0^{(p_i)} = n_{shift} N_{sc}^{RB} + \left( k_{TC}^{(p_i)} + k_{offset}^{l'} + s(k_{comb,\ offset}^{subset}) \right) \bmod N_{comb}^{subset} \ (10);$$

where $n_{shift}$ represents a preset threshold; $N_{sc}^{RB}$ represents a number of subcarriers per RB; $k_{\mathrm{TC}}^{(p_i)} \epsilon [0, \ K_{\mathrm{TC}} - 1]$; $K_{TC}$ represents a comb value when mapping an SRS resource in the frequency domain;

$k^{l'}_{offset}$ represents an offset during SRS positioning; $N^{subset}_{comb}$ represents a number of frequency-domain positions that are occupied by the terminal adopting comb offset hopping; $N^{subset}_{comb} \leq K_{TC}$ ; $s(\cdot)$ is configured by the network device; and $s(\cdot)$ indicates a position to which the comb hopping offset is mapped when the terminal adopts comb offset hopping.

In an embodiment, when obtaining the frequency-domain position offset $\bar{k}^{(p_i)}_0$ of the SRS port $P_i$ by calculating based on the comb offset $k^{(p_i)}_{TC}$ of the SRS port $P_i$ and the comb hopping offset $k^{subset}_{comb,\ offset}$, $\bar{k}^{(p_i)}_0$ is calculated by equation (11):

$$\bar{k}^{(p_i)}_0 = n_{shift}N^{RB}_{sc} + s\left(\left(k^{(p_i)}_{TC} + k^{l'}_{offset} + k^{subset}_{comb,\ offset}\right) modN^{subset}_{comb}\right)(11).$$

In an embodiment, when obtaining calculating the frequency-domain position offset $\bar{k}^{(p_i)}_0$ of the SRS port $P_i$ by calculating based on the comb offset $k^{(p_i)}_{TC}$ of the SRS port $P_i$ and the comb hopping offset $k^{subset}_{comb,\ offset}$, $\bar{k}^{(p_i)}_0$ is calculated by equation (12):

$$\bar{k}^{(p_i)}_0 = n_{shift}N^{RB}_{sc} + \left(k^{(p_i)}_{TC} + k^{l'}_{offset} + s(k^{subset}_{comb,\ offset})\right) modN^{subset}_{comb}\ (12);$$

where $n_{shift}$ represents a threshold; $N^{RB}_{sc}$ represents a number of subcarriers per RB; $k^{(p_i)}_{TC}$ represents a frequency-domain offset of the SRS port $P_i$, which is used to ensure orthogonality between different ports; $k^{(p_i)}_{TC}\epsilon[0,\ K_{TC}-1]$ ; $k^{subset}_{comb,\ offset}$ represents a comb offset by adopting comb offset hopping; $k^{l'}_{offset}$ represents an offset during SRS positioning, and its value is determined based on related arts or a protocol when the SRS is used for positioning, otherwise, its value=0 when the SRS is not used for positioning; $N^{subset}_{comb}$ a number of comb offsets that are occupied by the terminal adopting comb offset hopping; $N^{subset}_{comb} \leq K_{TC}$ ; $s(\cdot)$ is configured by the network device; and $s(\cdot)$ indicates a position to which the comb hopping offset is mapped when the terminal adopts comb offset hopping.

Moreover, $s(\cdot)$ is configured by the network device, and it indicates a position to which the comb hopping offset is mapped when the terminal adopts comb offset hopping. For example, s(x) represents a position of the comb offset to map to by a terminal adopting comb offset hopping. s(x) is one-to-one mapped to x, and $x=0, 1, 2, ..., N^{subset}_{comb}-1$ .

Assuming that the network device indicate a comb offset that is occupied by a terminal adopting comb offset hopping through the RRC parameter: *combSubset,* when $K_{TC}$=4, the RRC parameter *combSubset*=2, 3 (i.e., the terminal adopting comb offset hopping can only hop between comb offsets 2 and 3), the number of resources that is occupied by the terminal adopting comb offset hopping $N^{subset}_{comb}$=2 , and the first value in the 2 comb offsets is mapped to comb offset 2 and the second value is mapped to comb offset 3. This mapping relationship is represented by $s(\cdot)$ in the equation. For the $x$th value, $x \in \{0,\ 1,\ ...,\ N^{subset}_{comb} - 1\}$, and the terminal adopting comb offset hopping maps it to a comb offset s(x).

In an embodiment, sending the SRS within the cyclic shift hopping subset, includes:

determining a cyclic shift position for sending the SRS within the cyclic shift hopping subset when the terminal adopts cyclic shift hopping; and
sending the SRS at the cyclic shift position.

In detail, after the cyclic shift hopping subset is determined based on the configuration information, the terminal determines that SRS hopping can be achieved within this subset, determines the cyclic shift hopping offset of the SRS adopting cyclic shift hopping based on the cyclic shift configuration parameter $n_{\mathrm{SRS}}^{\mathrm{cs}}$, and determines the cyclic shift position for sending the SRS within the cyclic shift hopping subset based on the cyclic shift hopping offset and then sends the SRS at the cyclic shift position.

The cyclic shift configuration parameter $n_{\mathrm{SRS}}^{\mathrm{cs}}$ is indicated by a high-layer parameter or predefined by a protocol.

In an embodiment, determining the cyclic shift position for sending the SRS within the cyclic shift hopping subset when the terminal adopts cyclic shift hopping, includes:

obtaining a cyclic shift hopping offset by converting a y-bit binary pseudorandom sequence corresponding to a moment t among SRS sequences into a decimal integer based on an index t of the OFDM symbol where the SRS is among a plurality of radio frames; and
determining the cyclic shift position of the SRS based on the configuration information and the cyclic shift hopping offset.

In detail, to determine the cyclic shift position for sending the SRS when the terminal adopts cyclic shift hopping, the index t of the OFDM symbol where the SRS is among the plurality of radio frames is first determined, the y-bit binary pseudorandom sequence corresponding to the moment t among the SRS sequences is converted into the decimal integer to obtain the cyclic shift hopping offset, and the cyclic shift position of the SRS is calculated based on the cyclic shift hopping offset.

For example, firstly, an index t of an OFDM symbol where an SRS is among a plurality of radio frames is determined, then a 8-bit binary pseudorandom sequence *c(i)* corresponding to the moment t among SRS sequences is converted into a decimal integer to indicate a cyclic shift to hop to at the current OFDM symbol t.

It should be noted that for the next OFDM symbol t', the above processes are repeated. That is, the 8-bit binary pseudorandom sequence *c(i)* corresponding to the moment *t* among the SRS sequences is converted into the decimal integer to indicate the cyclic shift to which the current OFDM symbol t can hop, and the cyclic shift position occupied by the SRS at the OFDM symbol t' is further determined.

In an embodiment, obtaining the cyclic shift hopping offset by converting the y-bit binary pseudorandom sequence corresponding to the moment t among the SRS sequences into the decimal integer, includes:

obtaining the cyclic shift hopping offset $n_{cs,\ offset}^{subset}$ by calculating based on any one of the following equation (13)-(15):

$$n_{cs,\ offset}^{subset} = \left(\sum_{m=0}^{y-1} c(\mathrm{y} * t + m) * 2^m\right) mod N_{cs}^{subset}\ (13);$$

$$n_{cs,\ offset}^{subset} = \left(\sum_{m=0}^{y-1} c(\mathrm{y} * t + m) * 2^m\right) mod n_{\mathrm{SRS}}^{\mathrm{cs,\ max}}\ (14);$$

and

$$n_{cs,\ offset}^{subset} = \sum_{m=0}^{y-1} c(\mathrm{y} * t + m) * 2^m\ (15);$$

where $N_{cs}^{subset}$ represents a number of frequency-domain positions that are occupied by the terminal adopting cyclic shift hopping; $N_{cs}^{subset} \le n_{\mathrm{SRS}}^{\mathrm{cs,\ max}}$; $n_{\mathrm{SRS}}^{\mathrm{cs,\ max}}$ represents the maximum cyclic shift hopping offset; $c(y * t + m)$ represents the y-bit binary pseudorandom sequence corresponding to the moment t among the SRS sequences; m represents an intermediate quantity used to calculate the comb hopping offset $k_{comb,\ offset}^{subset}$; and m $\in$ [0, y-1].

In detail, the terminal calculates the cyclic shift hopping offset $n_{cs,\ offset}^{subset}$ of the current OFDM symbol t.

The terminal may calculate the $n_{cs,\ offset}^{subset}$ using different methods based on whether it adopts cyclic shift hopping.

For example, for a terminal adopting cyclic shift hopping, the cyclic shift hopping offset $n_{cs,\ offset}^{subset}$ is calculated based on the following equation (16):

$$n_{cs,\ offset}^{subset} = \left(\sum_{m=0}^{7} c(8*t+m)*2^m\right) mod N_{cs}^{subset} \quad (16).$$

For example, for a terminal adopting cyclic shift hopping, the cyclic shift hopping offset $n_{cs,\ offset}^{subset}$ is calculated based on the following equation (17):

$$n_{cs,\ offset}^{subset} = \left(\sum_{m=0}^{7} c(8*t+m)*2^m\right) mod\, n_{SRS}^{cs,\ max} \quad (17).$$

For example, for a terminal adopting cyclic shift hopping, the cyclic shift hopping offset $n_{cs,\ offset}^{subset}$ is calculated based on the following equation (18):

$$n_{cs,\ offset}^{subset} = \sum_{m=0}^{7} c(8*t+m)*2^m \quad (18).$$

For example, for a terminal not adopting cyclic shift hopping, the cyclic shift hopping offset $n_{cs,\ offset}^{subset}=0$ .

In the above equations, $t$ represents an index $t$ of an OFDM symbol where an SRS is among a plurality of radio frames, and it satisfies: t = $mod(SFN,\ N)N_{slot}^{frame,\ \mu}N_{symb}^{slot}+n_{s,\ f}^{\mu}N_{symb}^{slot} + l_0 + l'$ ; mod($SFN, N$) represents an index of a current radio frame; $N_{slot}^{frame,\ \mu}$ represents a number of slots in a radio frame; $N_{symb}^{slot}$ represents a number of OFDM symbols in a slot; $N_{slot}^{frame,\ \mu}N_{symb}^{slot}$ represents a number of OFDM symbols in a radio frame; $n_{s,\ f}^{\mu}$ represents an index of a slot in a radio frame; $N_{symb}^{slot}$ represents a number of OFDM symbols in a slot; $n_{s,\ f}^{\mu}N_{symb}^{slot}$ represents a number of OFDM symbols before a slot occupied by the SRS; $l_0$ represents a starting OFDM symbol position of the SRS within a slot; $l'$ represents an index of a current OFDM symbol among OFDM symbols occupied by the SRS; and $l' \in$ [0, a number of OFDM symbols occupied by the SRS-1].

In an embodiment, determining the cyclic shift position of the SRS based on the configuration information and the cyclic shift hopping offset, includes:

obtaining a code-domain offset $n_{SRS}^{cs,\ i}$ of an SRS port $P_i$ by calculating based on a cyclic shift configuration parameter $n_{SRS}^{cs}$;

obtaining a cyclic shift $\alpha_i$ by calculating based on the code-domain offset $n_{SRS}^{cs,\ i}$ of the SRS port $P_i$ and the cyclic shift hopping offset $n_{cs,\ offset}^{subset}$; and

determining the cyclic shift position of the SRS based on the cyclic shift $\alpha_i$.

In detail, for the SRS port $P_i$, the base station configures the cyclic shift configuration parameter $n_{SRS}^{cs}$ corresponding to the SRS port $P_i$ according to the *cyclicShift* in the parameter: *transmission Comb,* and calculates the code-domain offset $n_{SRS}^{cs,\ i}$ of the SRS port $P_i$ based on the cyclic shift configuration parameter $n_{SRS}^{cs}$ corresponding to the SRS port $P_i$ using the following equation (19):

$$n_{\text{SRS}}^{\text{cs, } i} = \begin{cases} \left( n_{\text{SRS}}^{\text{cs}} + \dfrac{n_{\text{SRS}}^{\text{cs, max}} \lfloor (p_i - 1000)/2 \rfloor}{N_{\text{ap}}^{\text{SRS}}/2} \right) \bmod n_{\text{SRS}}^{\text{cs, max}} & \text{if } N_{\text{ap}}^{\text{SRS}} = 4 \text{ and } n_{\text{SRS}}^{\text{cs, max}} = 6 \\ \left( n_{\text{SRS}}^{\text{cs}} + \dfrac{n_{\text{SRS}}^{\text{cs, max}} (p_i - 1000)}{N_{\text{ap}}^{\text{SRS}}} \right) \bmod n_{\text{SRS}}^{\text{cs, max}} & \text{otherwise} \end{cases} \quad (19).$$

After the code-domain offset $n_{\text{SRS}}^{\text{cs, } i}$ of the SRS port $P_i$ is calculated, the cyclic shift $\alpha_i$ is calculated based on the code-domain offset $n_{\text{SRS}}^{\text{cs, } i}$ of the SRS port $P_i$ and the cyclic shift hopping offset $n_{cs,\ offset}^{subset}$, and the SRS is sent at the cyclic shift position.

The cyclic shift position is the cyclic shift $\alpha_i$.

In an embodiment, obtaining the cyclic shift $\alpha_i$ by calculating based on the code-domain offset $n_{\text{SRS}}^{\text{cs, } i}$ of the SRS port $P_i$ and the cyclic shift hopping offset $n_{cs,\ offset}^{subset}$, includes:

calculating the cyclic shift $\alpha_i$ based on the following equation (20) or (21):

$$\alpha_i = 2\pi \frac{s\left(\left(n_{\text{SRS}}^{\text{cs, } i} + n_{cs,\ offset}^{subset}\right) \bmod N_{cs}^{subset}\right)}{n_{\text{SRS}}^{\text{cs, max}}} \quad (20);$$

or

$$\alpha_i = 2\pi \frac{\left(n_{\text{SRS}}^{\text{cs, } i} + s(n_{cs,\ offset}^{subset})\right) \bmod N_{cs}^{subset}}{n_{\text{SRS}}^{\text{cs, max}}} \quad (21);$$

where $n_{\text{SRS}}^{\text{cs, } i}$ represents a code-domain offset of the SRS port $P_i$; $n_{\text{SRS}}^{\text{cs, } i} \in \left[0, n_{\text{SRS}}^{\text{cs, max}} - 1\right]$; represents a number of frequency-domain positions that are occupied by the terminal adopting cyclic shift hopping; $N_{cs}^{subset} \leq n_{\text{SRS}}^{\text{cs, max}}$; $n_{\text{SRS}}^{\text{cs, max}}$ represents the maximum cyclic shift hopping offset; $s(\cdot)$ is configured by the network device; and $s(\cdot)$ indicates a position to which the cyclic shift hopping offset is mapped when the terminal adopts cyclic shift hopping.

In detail, when calculating the cyclic shift $\alpha_i$ based on the code-domain offset $n_{\text{SRS}}^{\text{cs, } i}$ of the SRS port $P_i$ and the cyclic shift hopping offset $n_{cs,\ offset}^{subset}$, the cyclic shift $a_i$ is calculated through the following equation (22):

$$\alpha_i = 2\pi \frac{s\left(\left(n_{\text{SRS}}^{\text{cs, } i} + n_{cs,\ offset}^{subset}\right) \bmod N_{cs}^{subset}\right)}{n_{\text{SRS}}^{\text{cs, max}}} \quad (22).$$

In detail, when calculating the cyclic shift $\alpha_i$ based on the code-domain offset $n_{\text{SRS}}^{\text{cs, } i}$ of the SRS port $P_i$ and the cyclic shift hopping offset $n_{cs,\ offset}^{subset}$, the cyclic shift $\alpha_i$ is calculated through the following equation (23):

$$\alpha_i = 2\pi \frac{\left(n_{\text{SRS}}^{\text{cs, } i} + s(n_{cs,\ offset}^{subset})\right) \bmod N_{cs}^{subset}}{n_{\text{SRS}}^{\text{cs, max}}} \quad (23);$$

where $n_{\text{SRS}}^{\text{cs, max}}$ represents the maximum cyclic shift hopping offset; $n_{\text{SRS}}^{\text{cs, }i}$ represents a code-domain offset of the SRS port $P_i$, which is used to ensure orthogonality between different ports; $n_{\text{SRS}}^{\text{cs, }i} \in [0, n_{\text{SRS}}^{\text{cs, max}} - 1]$; $n_{cs, \ offset}^{subset}$ represents a cyclic shift by adopting cyclic shift hopping; $N_{cs}^{subset}$ represents a number of cyclic shifts that are occupied by a terminal adopting cyclic shift hopping; and $N_{cs}^{subset} \leq n_{\text{SRS}}^{\text{cs, max}}$ .

Moreover, $s(\cdot)$ is configured by the network device, and it indicates a position to which the cyclic shift hopping offset is mapped when the terminal adopts cyclic shift hopping. For example, $s(x)$ is configured by the base station and represents a cyclic shift position that can be mapped to by a terminal adopting comb offset hopping, and $s(x)$ is one-to-one mapped to $x$, $x=0, 1, 2, \ldots, N_{cs}^{subset}-1$ .

Assuming that the base station uses an RRC parameter: *cyclicShift* to indicate a cyclic shift that is occupied by a terminal adopting cyclic shift hopping, when $n_{\text{SRS}}^{\text{cs, max}}=8$ , *cyclicShift* = 2, 3, 4, 5 (it indicates that the terminal adopting cyclic shift hopping can only hop between cyclic shifts 2-5), and the number of resources that are occupied by the terminal adopting cyclic shift hopping $N_{cs}^{subset}=4$ . The first value in the 4 cyclic shifts is mapped to cyclic shift 2, the second to cyclic shift 3, the third to cyclic shift 4, and the fourth to cyclic shift 5. This mapping relationship is represented by $s(\cdot)$ in the equation. For the $x^{\text{th}}$ value, $x \in \{0, \ 1, \ \ldots, \ N_{cs}^{subset} - 1\}$, the terminal adopting cyclic shift hopping maps it to a cyclic shift $s(x)$.

In an embodiment, when a terminal adopts comb offset hopping, the t satisfies:

$$t = \begin{cases} \mathrm{mod}(SFN, N)N_{slot}^{frame,\mu}N_{symb}^{slot}+n_{s,f}^{\mu}N_{symb}^{slot} + l_0 + l', & \text{if comb offset hopping occurs each time an OFDM symbol appears} \\ \mathrm{mod}(SFN, N)N_{slot}^{frame,\mu}N_{symb}^{slot}+n_{s,f}^{\mu}N_{symb}^{slot} + l_0 + \left\lfloor \dfrac{l'}{R}\right\rfloor R, & \text{if comb offset hopping occurs every } R \text{ OFDM symbols} \end{cases}$$

where *mod(SFN, N)* represents an index of a current radio frame; $N_{\text{slot}}^{\text{frame, }\mu}$ represents a number of slots in a radio frame; $N_{symb}^{slot}$ represents a number of OFDM symbols in a slot; $N_{\text{slot}}^{\text{frame, }\mu}N_{symb}^{slot}$ represents a number of OFDM symbols in a radio frame; $n_{s, \ f}^{\mu}$ represents an index of a slot in a radio frame; $N_{symb}^{slot}$ represents a number of OFDM symbols in a slot; $n_{s, \ f}^{\mu}N_{symb}^{slot}$ represents a number of OFDM symbols before a slot occupied by the SRS; $l_0$ represents a starting OFDM symbol position of the SRS within a slot; $l'$ represents an index of a current OFDM symbol among OFDM symbols occupied by the SRS; $l' \in [0$, a number of OFDM symbols occupied by the SRS-1]; and R represents that the same SRS is sent over R OFDM symbols.

In an embodiment, when a terminal adopts cyclic shift hopping, the t satisfies:

$$\mathrm{t} = \mathrm{mod}\big(SFN, \ N\big)N_{\text{slot}}^{\text{frame, }\mu}N_{symb}^{slot}+n_{s, \ f}^{\mu}N_{symb}^{slot} + l_0 + l';$$

where *mod(SFN, N)* represents an index of a current radio frame; $N_{\text{slot}}^{\text{frame, }\mu}$ represents a number of slots in a radio frame; $N_{symb}^{slot}$ represents a number of OFDM symbols in a slot; $N_{\text{slot}}^{\text{frame, }\mu}N_{symb}^{slot}$ represents a number of OFDM symbols in a radio frame; $n_{s, \ f}^{\mu}$ represents an index of a slot in a radio frame; $N_{symb}^{slot}$ represents a number of OFDM symbols in a slot; $n_{s, \ f}^{\mu}N_{symb}^{slot}$ represents a number of OFDM symbols before a slot occupied by the SRS; $l_0$ represents a starting OFDM symbol position of the SRS within a slot; $l'$ represents an index of a current OFDM symbol among OFDM symbols occupied by the SRS; and $l' \in [0$, a number of OFDM symbols occupied by the SRS-1].

FIG. 3 is a schematic flowchart of a method for sending an SRS provided by an embodiment of the disclosure. As illustrated in FIG. 3, the method for sending the SRS is applied to a network device, i.e., an execution entity of the method is the network device. The method includes the following steps.

At step 300, configuration information is sent to a terminal, in which the configuration information is used for the terminal to determine a comb offset hopping subset and/or a cyclic shift hopping subset, the comb offset hopping subset is dedicated for sending an SRS by adopting comb offset hopping, and the cyclic shift hopping subset is dedicated for sending an SRS by adopting cyclic shift hopping.

In detail, the network device sends the configuration information to the terminal to configure the comb offset hopping subset and/or the cyclic shift hopping subset, and the terminal determines the comb offset hopping subset and/or the cyclic shift hopping subset based on the configuration information.

The comb offset hopping subset is used to restrict values to hop to for comb offset hopping. The subset does not include frequency-domain resources that are occupied by any terminal/SRS that does not support comb offset hopping.

The cyclic shift hopping subset is used to restrict values to hop to for cyclic shift hopping. The subset does not include code-domain resources that are occupied by any terminal/SRS that does not support cyclic shift hopping.

The terminal may determine the comb offset hopping subset based on the configuration information, determine transmission resources for the SRS by adopting comb offset hopping within the comb offset hopping subset and then send the SRS.

The terminal may also determine the cyclic shift hopping subset based on the configuration information, determine transmission resources for the SRS by adopting cyclic shift hopping within the cyclic shift hopping subset and then send the SRS. In detail, some terminals support comb offset hopping/cyclic shift hopping, while others do not support comb offset hopping/cyclic shift hopping or similar techniques. When these two kinds of terminals are reused, collisions between the SRS supporting comb offset hopping and/or cyclic shift hopping and the legacy SRS not supporting comb offset hopping and/or cyclic shift hopping may occur during comb offset hopping and/or cyclic shift hopping. For example, when the terminal adopts comb offset hopping, it may occupy the same frequency-domain resources as terminals not supporting comb offset hopping due to frequency resource hopping.

To prevent this scenario, different resources are allocated to terminals adopting comb offset hopping and terminals not adopting comb offset hopping, respectively. That is, the terminals not adopting comb offset hopping occupy a subset of comb offsets, while the terminals adopting comb offset hopping occupy the remaining comb offsets. The network device may configure a comb offset hopping subset for the terminals/SRSs adopting comb offset hopping, so as to restrict the value to hop to during comb offset hopping within the comb offset hopping subset. The subset does not include frequency-domain resources that are occupied by terminals/SRSs not supporting comb offset hopping.

For example, when comb=4, if a terminal not adopting comb offset hopping occupies comb offset 0, then the terminal adopting comb offset hopping can only hop on comb offsets 1, 2 and 3, or a subset thereof, and the specific configuration of comb offset in such case is based on the network device.

For example, a terminal adopting cyclic shift hopping may occupy the same cyclic shift as a terminal not adopting cyclic shift hopping. To prevent this, it is limited that the terminal adopting cyclic shift hopping and the terminal not adopting cyclic shift hopping shall occupy different cyclic shifts. That is, the terminal not adopting cyclic shift hopping occupies a subset of cyclic shifts, while the terminal adopting cyclic shift hopping occupies the remaining cyclic shifts. The network device may configure a cyclic shift hopping subset for terminals/SRSs adopting cyclic shift hopping, so as to restrict the value to hop to during cyclic shift hopping within the cyclic shift hopping subset. The subset does not include code-domain resources that are occupied by terminals/SRSs not supporting cyclic shift hopping.

For example, for a terminal with the maximum cyclic shift value of 6, if a terminal not adopting cyclic shift hopping occupies cyclic shifts 0 and 1, then the terminal adopting cyclic shift hopping can only hop on cyclic shifts 2, 3, 4 and 5, or a subset thereof, and the specific configuration of cyclic shift in such case is based on the base station.

The embodiments of the disclosure realize resource reuse by avoiding collisions with legacy terminals when starting SRS comb offset hopping and/or cyclic shift hopping.

According to the method for sending the SRS provided in the embodiments of the disclosure, the comb offset hopping subset and/or the cyclic shift hopping subset for the SRS may be configured, so that comb offset hopping and cyclic shift hopping for the SRS are limited to the corresponding respective subsets. The subsets do not include frequency-domain/code-domain resources that are occupied by UEs/SRSs not supporting comb offset hopping and/or cyclic shift hopping, and thus collisions between the SRS supporting comb offset hopping and/or cyclic shift hopping and the legacy SRS not supporting such techniques may be avoided, thereby improving SRS transmission performance.

The configuration information is used to indicate at least one of the following:

frequency-domain resources in the comb offset hopping subset including a portion of all frequency-domain resources in an OFDM symbol where the SRS is;

cyclic shifts in the cyclic shift hopping subset including a portion of all cyclic shifts in an OFDM symbol where the SRS is;

the comb offset hopping subset including N frequency-domain resource position(s) in all frequency-domain resources, and N being an integer greater than 0 and less than a total number of frequency-domain positions in all the frequency-domain resources;

the cyclic shift hopping subset including M code-domain resource position(s) in all cyclic shifts, and M being an integer greater than 0 and less than a total number of cyclic shifts;

the comb offset hopping subset including the first P frequency-domain resource position(s) in all frequency-domain resources, and P being an integer greater than 0 and less than a total number of frequency-domain resources; or

the cyclic shift hopping subset including the first Q code-domain resource position(s) in all cyclic shifts, and Q being an integer greater than 0 and less than a total number of cyclic shifts.

The configuration information may indicate a comb offset that is occupied by a terminal adopting comb offset hopping.

For example, the configuration information may indicate that frequency-domain resources in the comb offset hopping subset include a portion of all frequency-domain resources in an OFDM symbol where the SRS is. That is, the terminal adopting comb offset hopping may occupy a fixed number of comb offsets that is a part of all comb offsets. For example, the terminal adopting comb offset hopping may occupy 1/2 or 1/2±a of a total number of comb offsets, and a is an integer greater than or equal to 0 and less than half the total number of comb offsets.

For example, the configuration information may indicate that the comb offset hopping subset includes N frequency-domain resource position(s) in all frequency-domain resources. That is, a number of resources occupied by the terminal adopting comb offset hopping is flexibly configured by the base station. For example, the terminal adopting comb offset hopping may randomly select N comb offsets to occupy, while terminals not adopting comb offset hopping may occupy the remaining comb offsets.

For example, the configuration information may indicate that the comb offset hopping subset includes the first P frequency-domain resource position(s) in all frequency-domain resources. That is, a number of resources occupied by the terminal adopting comb offset hopping is flexibly configured by the base station. For example, the terminal adopting comb offset hopping may occupy the first P continuous comb offsets, while terminals not adopting comb offset hopping may occupy the remaining comb offsets.

The configuration information may also indicate a cyclic shift that is occupied by a terminal adopting cyclic shift hopping.

For example, the configuration information may indicate that cyclic shifts in the cyclic shift hopping subset include a portion of all cyclic shifts in an OFDM symbol where the SRS is. That is, the terminal adopting cyclic shift hopping may occupy a fixed number of cyclic shifts that are a part of all cyclic shifts. For example, the terminal adopting cyclic shift hopping may occupy 1/2 or 1/2±b of a total number of cyclic shifts, and b is an integer greater than or equal to 0 and less than half the total number of cyclic shifts.

For example, the configuration information may indicate that the cyclic shift hopping subset includes the first Q code-domain resource position(s) in all cyclic shifts. That is, a number of resources occupied by the terminal adopting cyclic shift hopping is flexibly configured by the base station. For example, the terminal adopting cyclic shift hopping may occupy the first Q continuous cyclic shifts, while terminals not adopting cyclic shift hopping may occupy the remaining cyclic shifts.

For example, the configuration information may indicate that the cyclic shift hopping subset includes M code-domain resource position(s) in all cyclic shifts. That is, a number of resources occupied by the terminal adopting cyclic shift hopping is flexibly configured by the base station. For example, the terminal adopting cyclic shift hopping may randomly select M cyclic shifts, while terminals not adopting cyclic shift hopping may occupy the remaining cyclic shifts.

The configuration information is specifically used to indicate one or more of the following:

(a) frequency-domain resources in the comb offset hopping subset including a portion of all frequency-domain resources in an OFDM symbol where the SRS is;

(b) cyclic shifts in the cyclic shift hopping subset including a portion of all cyclic shifts in an OFDM symbol where the SRS is;

(c) the comb offset hopping subset including N frequency-domain resource position(s) in all frequency-domain resources, and N being an integer greater than 0 and less than a total number of frequency-domain positions in all the frequency-domain resources;

(d) the cyclic shift hopping subset including M code-domain resource position(s) in all cyclic shifts, and M being an integer greater than 0 and less than a total number of cyclic shifts;

(e) the comb offset hopping subset including the first P frequency-domain resource position(s) in all frequency-domain resources, and P being an integer greater than 0 and less than a total number of frequency-domain positions in all the frequency-domain resources; and

(f) the cyclic shift hopping subset including the first Q code-domain resource position(s) in all cyclic shifts, and Q being an integer greater than 0 and less than a total number of cyclic shifts.

The configuration information may indicate (a)+(c), (a)+(e), (c)+(e), or (a)+(c)+(e), and the terminal may determine the comb offset hopping subset based on the contents of (a)+(c), (a)+(e), or (c)+(e), or may select one of the indicated items to determine the comb offset hopping subset.

The configuration information may also indicate (b)+(d), (b)+(f), (d)+(f), or (b)+(d)+(f), and the terminal may determine the cyclic shift hopping subset based on the contents of (b)+(d), (b)+(f), or (d)+(f), or may select one of the indicated items to determine the cyclic shift hopping subset.

The configuration information may indicate any combination of (a)-(f), and the terminal may determine the comb offset hopping subset and/or the cyclic shift hopping subset based on the contents of the indicated items, or select one or two items from the indicated items to determine the comb offset hopping subset and/or the cyclic shift hopping subset. Further examples are omitted here.

For example, the configuration information may indicate a comb offset that is occupied by a terminal adopting comb offset hopping and a cyclic shift that is occupied by a terminal adopting cyclic shift hopping.

The configuration information may indicate that a terminal adopting comb offset hopping may occupy a fixed number of comb offsets, and a terminal adopting cyclic shift hopping may occupy a fixed number of cyclic shifts. For example, the terminal adopting comb offset hopping may occupy 1/2 or $1/2 \pm a$ of a total number of comb offsets (a is an integer greater than or equal to 0 and less than half the total number of comb offsets), and the terminal adopting cyclic shift hopping may occupy 1/2 or $1/2 \pm b$ of a total number of cyclic shifts (b is an integer greater than or equal to 0 and less than half the total number of cyclic shifts).

The configuration information may indicate that a number of resources occupied by a terminal adopting comb offset hopping is flexibly configured by the base station, and a number of cyclic shifts occupied by a terminal adopting cyclic shift hopping includes a fixed number of cyclic shifts. For example, the terminal adopting comb offset hopping may randomly select N comb offsets to occupy, while terminals not adopting comb offset hopping may occupy the remaining comb offsets, and the terminal adopting cyclic shift hopping may occupy 1/2 or $1/2 \pm b$ of a total number of cyclic shifts (b is an integer greater than or equal to 0 and less than half the total number of cyclic shifts), while the terminal not adopting cyclic shift hopping may occupy the remaining cyclic shifts.

The configuration information may indicate that a number of resources occupied by a terminal adopting comb offset hopping is flexibly configured by the base station, and a number of cyclic shifts occupied by a terminal adopting cyclic shift hopping includes a fixed number of cyclic shifts. For example, the terminal adopting comb offset hopping may occupy the first P continuous comb offset(s), while terminals not adopting comb offset hopping may occupy the remaining comb offsets, and the terminal adopting cyclic shift hopping may occupy 1/2 or $1/2 \pm b$ of a total number of cyclic shifts (b is an integer greater than or equal to 0 and less than half the total number of cyclic shifts), while the terminal not adopting cyclic shift hopping may occupy the remaining cyclic shifts.

The configuration information may indicate that a terminal adopting comb offset hopping may occupy a fixed number of comb offsets, and a number of resources occupied by a terminal adopting cyclic shift hopping is flexibly configured by the base station. For example, the terminal adopting comb offset hopping may occupy 1/2 or $1/2 \pm a$ of a total number of comb offsets (a is an integer greater than or equal to 0 and less than half the total number of comb offsets), while terminals not adopting comb offset hopping may occupy the remaining comb offsets, and the terminal adopting cyclic shift hopping may occupy the first Q continuous cyclic shifts, while the terminal not adopting cyclic shift hopping may occupy the remaining cyclic shifts.

The configuration information may indicate that a number of resources occupied by a terminal adopting comb offset hopping and a number of resources occupied by a terminal adopting cyclic shift hopping are flexibly configured by the base station. For example, the terminal adopting comb offset hopping may randomly select N comb offsets to occupy, while terminals not adopting comb offset hopping may occupy the remaining comb offsets, and the terminal adopting cyclic shift hopping may occupy the first Q continuous cyclic shifts, while the terminal not adopting cyclic shift hopping may occupy the remaining cyclic shifts.

The configuration information may indicate that a number of resources occupied by a terminal adopting comb offset hopping and a number of resources occupied by a terminal adopting cyclic shift hopping are flexibly configured by the base station. For example, the terminal adopting comb offset hopping may occupy the first P continuous comb offset(s), while terminals not adopting comb offset hopping may occupy the remaining comb offsets, and the terminal adopting cyclic shift hopping may occupy the first Q continuous cyclic shifts, while the terminal not adopting cyclic shift hopping may occupy the remaining cyclic shifts.

The configuration information may indicate that a terminal adopting comb offset hopping may occupy a fixed number of comb offsets, and a number of resources occupied by a terminal adopting cyclic shift hopping is flexibly configured by the base station. For example, the terminal adopting comb offset hopping may occupy 1/2 or $1/2 \pm a$ of a total number of comb offsets (a is an integer greater than or equal to 0 and less than half the total number of comb offsets), while terminals not adopting comb offset hopping may occupy the remaining comb offsets, and the terminal adopting cyclic shift hopping may randomly select M cyclic shifts, while the terminal not adopting cyclic shift hopping may occupy the remaining cyclic shifts.

The configuration information may indicate that a number of resources occupied by a terminal adopting comb offset hopping and a number of resources occupied by a terminal adopting cyclic shift hopping are flexibly configured by the base station. For example, the terminal adopting comb offset hopping may randomly select N comb offset(s), while terminals not adopting comb offset hopping may occupy the remaining comb offsets, and the terminal adopting cyclic shift hopping may randomly select M cyclic shifts, while the terminal not adopting cyclic shift hopping may occupy the remaining cyclic shifts.

The configuration information may indicate that a number of resources occupied by a terminal adopting comb offset hopping and a number of resources occupied by a terminal adopting cyclic shift hopping are flexibly configured by the base station. For example, the terminal adopting comb offset hopping may occupy the first P continuous comb offset(s), while terminals not adopting comb offset hopping may occupy the remaining comb offsets, and the terminal adopting cyclic shift hopping may randomly select M cyclic shifts, while the terminal not adopting cyclic shift hopping may occupy the remaining cyclic shifts.

In an embodiment, sending the configuration information to the terminal, includes:
indicating the configuration information via an RRC parameter or a high-layer parameter.

The configuration information may be indicated by an RRC parameter or a high-layer parameter. If the RRC parameter is used to indicate the configuration information, the RRC parameter configures the comb offset hopping subset and/or the cyclic shift hopping subset, and the high-layer parameter indicates the comb offset configuration parameter $\overline{k}_{TC}$ or the cyclic shift configuration parameter $n_{SRS}^{cs}$. Or, if the high-layer parameter is used to indicate the configuration information, the high-layer parameter configures the comb offset hopping subset and/or the cyclic shift hopping subset, because the high-layer parameter shall indicate the comb offset configuration parameter $\overline{k}_{TC}$ or the cyclic shift configuration parameter $n_{SRS}^{cs}$, it indicates the comb offset configuration parameter $\overline{k}_{TC}$ or the cyclic shift configuration parameter $n_{SRS}^{cs}$ together with the comb offset hopping subset and/or the cyclic shift hopping subset.

The high-layer parameter may indicate the comb offset configuration parameter $\overline{k}_{TC}$ while configuring the comb offset hopping subset.

The high-layer parameter may also indicate the cyclic shift configuration parameter $n_{SRS}^{cs}$ while configuring the cyclic shift hopping subset.

Or, the high-layer parameter may indicate the comb offset configuration parameter $\overline{k}_{TC}$ and the cyclic shift configuration parameter $n_{SRS}^{cs}$ while configuring the comb offset hopping subset and the cyclic shift hopping subset.

In an embodiment, the network device may use a new RRC parameter to configure a comb offset hopping subset. The RRC parameter uses one or more decimal integers to indicate a comb offset that is occupied by a terminal adopting comb offset hopping.

In an embodiment, the network device may explicitly configure the comb offset through *combOffset* in a high-layer parameter: *transmissionComb*. The *combOffset* contains a plurality of decimal integers, in which the first decimal integer may be used to indicate the $\overline{k}_{TC}$, a set of the following decimal integers may indicate a comb offset that is occupied by a terminal adopting comb offset hopping, and $\overline{k}_{TC} \in \{0, 1, ... , K_{TC} - 1\}$.

In an embodiment, the network device may use a new RRC parameter to configure a subset. The RRC parameter uses one or more integers to indicate a cyclic shift that is occupied by a terminal adopting cyclic shift hopping.

In an embodiment, the network device may explicitly configure the cyclic shift through *cyclicShift* in a high-layer parameter: *transmission Comb*. The *cyclicShift* contains a plurality of integers. The first integer may be used to indicate the $n_{SRS}^{cs}$, a set of the following integers may indicate a cyclic shift that is occupied by a terminal adopting cyclic shift hopping, and

$$n_{SRS}^{cs} \in \left\{ 0, \ 1, \ ... , \ n_{SRS}^{cs, \ max} - 1 \right\}.$$

According to the method for sending the SRS provided in the embodiments of the disclosure, the comb offset hopping subset and/or the cyclic shift hopping subset for the SRS may be configured, so that comb offset hopping and cyclic shift hopping for the SRS are limited to the corresponding respective subsets. The subsets do not include frequency-domain/code-domain resources that are occupied by UEs/SRSs not supporting comb offset hopping and/or cyclic shift hopping, and thus collisions between the SRS supporting comb offset hopping and/or cyclic shift hopping and the legacy SRS not supporting such techniques may be avoided, thereby improving SRS transmission performance.

In an embodiment, assuming that in frequency-domain resource mapping of the SRS port of the terminal, comb=4, i.e., the frequency-domain structure is spaced at an interval of 3 subcarriers, and there are 4 mappable comb offsets: comb offsets 0, 1, 2 and 3. The process for the terminal to send the SRS includes the following steps.

At step 1a, the base station configures a comb offset hopping subset for the terminal, and the terminal receives configuration information and determines the comb offset hopping subset.

In an embodiment, the configuration information is indicated by an RRC parameter, which is used to configure the comb offset hopping subset. The RRC parameter uses one or more integers to indicate a comb offset that is occupied by a terminal adopting comb offset hopping.

For example, the RRC parameter *combSubset=2,* 3, it indicates that the terminal adopting comb offset hopping can only hop within comb offsets 2-3. In this case, a number of resources $N_{comb}^{subset}$ that is occupied by the terminal adopting comb offset hopping is 2, in which the first value in the 2 comb offsets is mapped to comb offset 2, and the second value is mapped to comb offset 3.

In an embodiment, the configuration information may indicate that a number of comb offsets that are occupied by the terminal adopting comb offset hopping is 1/2 of a total number of comb offsets, that is the terminal adopting comb offset hopping can only occupy 2 comb offsets.

In an embodiment, the configuration information may indicate that a number of resources occupied by the terminal adopting comb offset hopping is flexibly configured by the base station. That is, the terminal adopting comb offset hopping occupies the first few consecutive comb offsets, while terminals not adopting comb offset hopping may occupy the remaining comb offsets.

For example, the terminal adopting comb offset hopping occupies comb offset 0, while terminals not adopting comb offset hopping occupy comb offsets 1, 2, 3.

In an embodiment, the configuration information may indicate that a number of resources occupied by the terminal adopting comb offset hopping is flexibly configured by the base station. That is, the terminal adopting comb offset hopping randomly select several comb offsets to occupy, while terminals not adopting comb offset hopping may occupy the remaining comb offsets.

For example, the RRC parameter may indicate that the terminal adopting comb offset hopping occupies comb offset 1, while terminals not adopting comb offset hopping occupy comb offsets 0, 2, 3.

In an embodiment, the comb offset that is occupied by the terminal adopting comb offset hopping is explicitly configured through *combOffset* in a high-layer parameter: *transmission Comb.* The *combOffset* contains a plurality of integers, in which the first integer may be used to indicate the $\overline{k}_{TC}$, a set of the following integers may indicate a comb offset that is occupied by a terminal adopting comb offset hopping, and $\overline{k}_{TC} \in \{0, 1, ..., K_{TC} - 1\}$.

For example, the RRC parameter indicates that *combOffset*= 3, 2, 3. This indicates that $\overline{k}_{TC}$=3, and the terminal adopting comb offset hopping can only hop between comb offsets 2 and 3. In this case, the number of the resources that are occupied by the terminal adopting comb offset hopping $N_{comb}^{subset}=2$, in which the first value in the 2 comb offsets is mapped to comb offset 2, and the second value is mapped to comb offset 3.

In an embodiment, the configuration information may indicate that a number of comb offsets that are occupied by the terminal adopting comb offset hopping is 1/2 of a total number of comb offsets. That it, the terminal adopting comb offset hopping can only occupy 2 comb offsets.

In an embodiment, the configuration information may indicate that a number of comb offsets that are occupied by the terminal adopting comb offset hopping is flexibly configured by the base station. That is, the terminal adopting comb offset hopping occupies the first few continuous comb offsets, while terminals not adopting comb offset hopping occupy the remaining comb offsets.

For example, the terminal adopting comb offset hopping occupies comb offset 0, while terminals not adopting comb offset hopping occupy comb offsets 1, 2, 3.

In an embodiment, the configuration information may indicate that a number of resources occupied by the terminal adopting comb offset hopping is flexibly configured by the base station. That is, the terminal adopting comb offset hopping may randomly select several comb offsets to occupy, while terminals not adopting comb offset hopping may occupy the remaining comb offsets.

For example, the RRC parameter may indicate that the terminal adopting comb offset hopping occupies comb offset 1, while terminals not adopting comb offset hopping occupy comb offsets 0, 2, 3.

At step 2a, the terminal calculates a frequency-domain starting position of an SRS according to the comb offset hopping subset configured according to the configuration information.

For an SRS port $P_i$, the base station configures a comb offset configuration parameter $\overline{k}_{TC}$ corresponding to the SRS port $P_i$ according to *combOffset* in a parameter *transmission Comb,* then calculates a comb offset $k_{TC}^{(p_i)}$ of the SRS port $P_i$ based on the comb offset configuration parameter $\overline{k}_{TC}$ corresponding to the SRS port $P_i$ using the following equation (24):

$$k_{TC}^{(p_i)} =$$

$$\begin{cases} (\bar{k}_{TC} + K_{TC}/2) \bmod K_{TC} & \text{if } N_{ap}^{SRS} = 4, \quad p_i \in \{1001, \ 1003\}, \quad \text{and } n_{SRS}^{cs, \ max} = 6 \\ (\bar{k}_{TC} + K_{TC}/2) \bmod K_{TC} & \text{if } N_{ap}^{SRS} = 4, \quad p_i \in \{1001, \ 1003\}, \quad \text{and } n_{SRS}^{cs} \in \left\{ n_{SRS}^{cs, \ max}/2, \ \ldots, \ n_{SRS}^{cs, \ max} - 1 \right\} \\ \bar{k}_{TC} & \text{otherwise} \end{cases}$$

(24)

Then, a comb hopping offset $k_{comb, \ offset}^{subset}$ of the current OFDM t is calculated in the following ways.

The terminal may calculate the $k_{comb, \ offset}^{subset}$ using different methods based on whether the SRS adopts comb offset hopping.

For example, for a terminal adopting comb offset hopping, the comb hopping offset $k_{comb, \ offset}^{subset}$ is calculated based on the following equation (25):

$$k_{comb, \ offset}^{subset} = \left( \sum_{m=0}^{7} c(8 * t + m) * 2^m \right) \bmod N_{comb}^{subset} \quad (25).$$

For example, for a terminal adopting comb offset hopping, the comb hopping offset $k_{comb, \ offset}^{subset}$ is calculated based on the following equation (26):

$$k_{comb, \ offset}^{subset} = \left( \sum_{m=0}^{7} c(8 * t + m) * 2^m \right) \bmod K_{TC} \quad (26).$$

For example, for a terminal adopting comb offset hopping, the comb hopping $\text{offset} k_{comb, \ offset}^{subset}$ is calculated based on the following equation (27):

$$k_{comb, \ offset}^{subset} = \sum_{m=0}^{7} c(8 * t + m) * 2^m \quad (27).$$

For example, for a terminal not adopting comb offset hopping, the comb hopping offset $k_{comb, \ offset}^{subset} = 0$.

In the above equations, *t* represents an index *t* of an OFDM symbol where an SRS is among a plurality of radio frames, and the index t satisfies:

$$t$$

$$= \begin{cases} \bmod(SFN, N) N_{slot}^{frame, \mu} N_{symb}^{slot} + n_{s,f}^{\mu} N_{symb}^{slot} + l_0 + l', & \text{the comb offset hopping is performed every one OFDM symbol} \\ \bmod(SFN, N) N_{slot}^{frame, \mu} N_{symb}^{slot} + n_{s,f}^{\mu} N_{symb}^{slot} + l_0 + \left\lfloor \frac{l'}{R} \right\rfloor R, & \text{the comb offset hopping is performed every R OFDM symbols} \end{cases}$$

where *mod(SFN, N)* represents an index of a current radio frame; $N_{slot}^{frame, \ \mu}$ represents a number of slots in a radio frame; $N_{symb}^{slot}$ represents a number of OFDM symbols in a slot; $N_{slot}^{frame, \ \mu} N_{symb}^{slot}$ represents a number of OFDM symbols in a radio frame; $n_{s, \ f}^{\mu}$ represents an index of a slot in a radio frame; $N_{symb}^{slot}$ represents a number of OFDM symbols in a slot; $n_{s, \ f}^{\mu} N_{symb}^{slot}$ represents a number of OFDM symbols before a slot occupied by the SRS; $l_0$ represents a starting OFDM symbol position of the SRS within a slot; *l'* represents an index of a current OFDM symbol among OFDM symbols occupied by the SRS; *l'* ∈ [0, a number of OFDM symbols occupied by the SRS-1]; and R represents that the same SRS is sent over R OFDM symbols.

A frequency-domain starting position $k_0^{(p_i)}$ of the SRS is calculated based on the following equation (28):

$$k_0^{(p_i)} = \bar{k}_0^{(p_i)} + n_{offset}^{FH} + n_{offset}^{RPFS} \quad (28);$$

where

$$n_{offset}^{FH} = \sum_{b=0}^{B_{SRS}} m_{SRS,\ b} N_{sc}^{RB} n_b;$$

$$n_{offset}^{RPFS} = N_{sc}^{RB} m_{SRS,\ B_{SRS}} \left( \left( k_F + k_{hop} \right) mod\, P_F \right) / P_F;$$

$$\bar{k}_0^{(p_i)} = n_{shift} N_{sc}^{RB} + s\left( \left( k_{TC}^{(p_i)} + k_{offset}^{l'} + k_{comb,\ offset}^{subset} \right) mod\, N_{comb}^{subset} \right);$$

or

$$\bar{k}_0^{(p_i)} = n_{shift} N_{sc}^{RB} + \left( k_{TC}^{(p_i)} + k_{offset}^{l'} + s(k_{comb,\ offset}^{subset}) \right) mod\, N_{comb}^{subset};$$

where $n_{shift}$ represents a threshold; $N_{sc}^{RB}$ represents a number of subcarriers per RB; $k_{TC}^{(p_i)}$ represents a frequency-domain offset of the SRS port $P_i$, which is used to ensure orthogonality between different ports; $k_{TC}^{(p_i)} \epsilon [0, \quad K_{TC} - 1]$ ;

represents a comb offset by adopting comb offset hopping; $k_{offset}^{l'}$ represents an offset during SRS positioning, and its value is determined based on related arts or a protocol when the SRS is used for positioning, otherwise, its value=0; $N_{comb}^{subset}$ represents a number of comb offsets that are occupied by the terminal adopting comb offset hopping; and $N_{comb}^{subset} \leq K_{TC}$ .

Moreover, $s(\cdot)$ is configured by the network device, and it indicates a position to which the comb hopping offset is mapped when the terminal adopts comb offset hopping. For example, s(x) represents a position of the comb offset to map to by a terminal adopting comb offset hopping. *s(x)* is one-to-one mapped to x, and $x = 0, 1, 2, \ldots, N_{comb}^{subset} - 1$ .

At step 3a, the terminal sends the SRS at the calculated frequency-domain starting position.

At step 4a, for the next OFDM symbol t', steps 2a and 3a are repeated to determine a frequency-domain position occupied by the SRS at the OFDM symbol t'.

In an embodiment, assuming that cyclic shift mapping of the SRS port of the terminal is cyclic shift 8, there are 8 mappable cyclic shifts: cyclic shifts 0, 1, 2, 3, 4, 5, 6, 7. The process for the terminal to send the SRS includes the following steps.

At step 1b, the base station configures a cyclic shift hopping subset for the terminal, and the terminal receives the configuration information and determines the cyclic shift hopping subset.

In an embodiment, the configuration information is indicated by an RRC parameter, which is used to configure the cyclic shift hopping subset. The RRC parameter uses one or more integers to indicate a cyclic shift that is occupied by a terminal adopting cyclic shift hopping.

For example, the RRC parameter *cyclicShift=2,* 3, 4, 5. It indicates that the terminal adopting cyclic shift hopping can only hop within cyclic shifts 2-5. In this case, a number of resources $N_{cs}^{subset}$ that are occupied by the terminal adopting cyclic shift hopping is 4, in which the first value in the 4 cyclic shifts is mapped to cyclic shift 2, the second value is mapped to cyclic shift 3, the third value is mapped to cyclic shift 4, and the fourth value is mapped to cyclic shift 5.

In an embodiment, the configuration information may indicate that a number of cyclic shifts that are occupied by the terminal adopting cyclic shift hopping is 1/2 of a total number of cyclic shifts, that is the terminal adopting cyclic shift hopping can only occupy 2 cyclic shifts.

In an embodiment, the configuration information may indicate that a number of resources occupied by the terminal adopting cyclic shift hopping is flexibly configured by the base station. That is, the terminal adopting cyclic shift hopping occupies the first few consecutive cyclic shifts, while terminals not adopting cyclic shift hopping may occupy the remaining cyclic shifts.

For example, the terminal adopting cyclic shift hopping occupies cyclic shifts 0, 1, 2, while terminals not adopting cyclic shift hopping occupy cyclic shifts 3, 4, 5, 6, 7.

In an embodiment, the configuration information may indicate that a number of resources occupied by the terminal adopting cyclic shift hopping is flexibly configured by the base station. That is, the terminal adopting cyclic shift hopping randomly select several cyclic shifts to occupy, while terminals not adopting cyclic shift hopping may occupy the remaining cyclic shifts.

For example, the RRC parameter may indicate that the terminal adopting cyclic shift hopping occupies cyclic shifts 1, 4, while terminals not adopting cyclic shift hopping occupy comb offsets 0, 2, 3, 5, 6, 7.

In an embodiment, the configuration information indicates that the cyclic shift that is occupied by the terminal adopting cyclic shift hopping is explicitly configured through *cyclicShift* in a high-layer parameter: *transmission Comb*. The *cyclicShift* contains a plurality of integers. The first integer may be used to indicate the $n_{\mathrm{SRS}}^{\mathrm{cs}}$, a set of the following integers may indicate a cyclic shift that is occupied by a terminal adopting cyclic shift hopping, and

$$n_{\mathrm{SRS}}^{\mathrm{cs}} \in \left\{ 0, \ 1, \ \dots, \ n_{\mathrm{SRS}}^{\mathrm{cs,\ max}} - 1 \right\}.$$

For example, the RRC parameter indicates that *cyclicShift=6*, 2, 3, 4, 5, $n_{\mathrm{SRS}}^{\mathrm{cs}}=6$, the terminal adopting cyclic shift hopping can only hop among cyclic shifts 2-5. In this case, a number of resources $N_{cs}^{subset}$ that are occupied by the terminal adopting cyclic shift hopping is 4, in which the first value in the 4 cyclic shifts is mapped to cyclic shift 2, the second value is mapped to cyclic shift 3, the third value is mapped to cyclic shift 4, and the fourth value is mapped to cyclic shift 5.

In an embodiment, the configuration information may indicate that a number of cyclic shifts that are occupied by the terminal adopting cyclic shift hopping is 1/2 of a total number of cyclic shifts. That it, the terminal adopting cyclic shift hopping can only occupy 2 cyclic shifts.

In an embodiment, the configuration information may indicate that a number of cyclic shifts that are occupied by the terminal adopting cyclic shift hopping is flexibly configured by the base station. That is, the terminal adopting cyclic shift hopping occupies the first few continuous cyclic shifts, while terminals not adopting cyclic shift hopping occupy the remaining cyclic shifts.

For example, the terminal adopting cyclic shift hopping occupies cyclic shifts 0, 1, 2, while terminals not adopting cyclic shift hopping occupy cyclic shifts 3, 4, 5, 6, 7.

In an embodiment, the configuration information may indicate that a number of resources occupied by the terminal adopting cyclic shift hopping is flexibly configured by the base station. That is, the terminal adopting cyclic shift hopping randomly select several cyclic shifts to occupy, while terminals not adopting cyclic shift hopping may occupy the remaining cyclic shifts.

For example, the RRC parameter indicates that the terminal adopting cyclic shift hopping occupies cyclic shifts 1, 4, while terminals not adopting cyclic shift hopping occupy cyclic shifts 0, 2, 3, 5, 6, 7.

At step 2b, the terminal calculates a cyclic shift of the SRS based on the cyclic shift hopping subset configured according to the configuration information.

In detail, for an SRS port $P_i$, the base station configures a cyclic shift configuration parameter $n_{\mathrm{SRS}}^{\mathrm{cs}}$ corresponding to the SRS port $P_i$ according to *cyclicShift* in a parameter: *transmission Comb*, then calculates a code-domain offset $n_{\mathrm{SRS}}^{\mathrm{cs,\ i}}$ of the SRS port $P_i$ based on the cyclic shift configuration parameter $n_{\mathrm{SRS}}^{\mathrm{cs}}$ corresponding to the SRS port $P_i$ using the following equation (29):

$$n_{\mathrm{SRS}}^{\mathrm{cs,\ i}} = \begin{cases} \left( n_{\mathrm{SRS}}^{\mathrm{cs}} + \dfrac{n_{\mathrm{SRS}}^{\mathrm{cs,\ max}} \lfloor (p_i - 1000)/2 \rfloor}{N_{\mathrm{ap}}^{\mathrm{SRS}}/2} \right) \bmod n_{\mathrm{SRS}}^{\mathrm{cs,\ max}} & \text{if } N_{\mathrm{ap}}^{\mathrm{SRS}} = 4 \text{ and } n_{\mathrm{SRS}}^{\mathrm{cs,\ max}} = 6 \\ \left( n_{\mathrm{SRS}}^{\mathrm{cs}} + \dfrac{n_{\mathrm{SRS}}^{\mathrm{cs,\ max}} (p_i - 1000)}{N_{\mathrm{ap}}^{\mathrm{SRS}}} \right) \bmod n_{\mathrm{SRS}}^{\mathrm{cs,\ max}} & \text{otherwise} \end{cases} \qquad (29).$$

Then, a cyclic shift hopping offset $n_{cs,\ offset}^{subset}$ of the current OFDM t is calculated in the following ways.

The terminal may calculate the $n_{cs,\ offset}^{subset}$ using different methods based on whether it adopts cyclic shift hopping.

For example, for a terminal adopting cyclic shift hopping, the $n_{cs,\ offset}^{subset}$ is calculated based on the following equation (30):

$$n_{cs,\ offset}^{subset} = \left(\sum_{m=0}^{7} c(8*t+m)*2^m\right) mod N_{cs}^{subset} \quad (30).$$

For example, for a terminal adopting cyclic shift hopping, the $n_{cs,\ offset}^{subset}$ is calculated based on the following equation (31):

$$n_{cs,\ offset}^{subset} = \left(\sum_{m=0}^{7} c(8*t+m)*2^m\right) mod\, n_{SRS}^{cs,\ max} \quad (30).$$

For example, for a terminal adopting cyclic shift hopping, the $n_{cs,\ offset}^{subset}$ is calculated based on the following equation (32):

$$n_{cs,\ offset}^{subset} = \sum_{m=0}^{7} c(8*t+m)*2^m \quad (32).$$

For example, for a terminal not adopting cyclic shift hopping, $n_{cs,\ offset}^{subset}=0$.

In the above equations, *t* represents an index *t* of an OFDM symbol where an SRS is among a plurality of radio frames, and it satisfies: $t = \mathrm{mod}(SFN,\ N)N_{slot}^{frame,\ \mu} N_{symb}^{slot} + n_{s,\ f}^{\mu} N_{symb}^{slot} + l_0 + l'$ ; mod(*SFN, N*) represents an index of a current radio frame; $N_{slot}^{frame,\ \mu}$ represents a number of slots in a radio frame; $N_{symb}^{slot}$ represents a number of OFDM symbols in a slot; $N_{slot}^{frame,\ \mu} N_{symb}^{slot}$ represents a number of OFDM symbols in a radio frame; $n_{s,\ f}^{\mu}$ represents an index of a slot in a radio frame; $N_{symb}^{slot}$ represents a number of OFDM symbols in a slot; $n_{s,\ f}^{\mu} N_{symb}^{slot}$ represents a number of OFDM symbols before a slot occupied by the SRS; $l_0$ represents a starting OFDM symbol position of the SRS within a slot; *l'* represents an index of a current OFDM symbol among OFDM symbols occupied by the SRS; and $l' \in$ [0, a number of OFDM symbols occupied by the SRS-1].

The cyclic shift $\alpha_i$ is calculated based on the equation (33) or (34):

$$\alpha_i = 2\pi \frac{s\left(\left(n_{SRS}^{cs,\ i} + n_{cs,\ offset}^{subset}\right) \mathrm{mod}\ N_{cs}^{subset}\right)}{n_{SRS}^{cs,\ max}} \quad (33);$$

or

$$\alpha_i = 2\pi \frac{\left(n_{SRS}^{cs,\ i} + s(n_{cs,\ offset}^{subset})\right) \mathrm{mod}\ N_{cs}^{subset}}{n_{SRS}^{cs,\ max}} (34);$$

where $n_{SRS}^{cs,\ i}$ represents a code-domain offset of the SRS port $P_i$; $n_{SRS}^{cs,\ i} \in \left[0, n_{SRS}^{cs,\ max} - 1\right]$ ; $N_{cs}^{subset}$ represents a number of frequency-domain positions that are occupied by the terminal adopting cyclic shift hopping;

$$N_{cs}^{subset} \leq n_{\mathrm{SRS}}^{\mathrm{cs, \; max}}; \quad n_{\mathrm{SRS}}^{\mathrm{cs, \; max}}$$ represents the maximum cyclic shift hopping offset; $s(\cdot)$ is configured by the network device; and $s(\cdot)$ indicates a position to which the cyclic shift hopping offset is mapped when the terminal adopts cyclic shift hopping.

At step 3, the terminal sends the SRS at the calculated cyclic shift position.

At step 4, for the next OFDM symbol $t'$, steps 2 and 3 are repeated to determine a cyclic shift position occupied by the SRS at the OFDM symbol $t'$.

The terminal involved in the embodiments of the disclosure may be a device that provides voice and/or data connectivity to users, a handheld device with a wireless connectivity function, or other processing devices connected to a wireless modem. The terminal is referred to by different names in different systems. For example, in the 5GS, the terminal may be referred to as UE. The wireless terminal may communicate with one or more core networks (CNs) via a radio access network (RAN). The wireless terminal may be a mobile terminal such as a cell phone (or "cellular" phone), or a computer having a mobile terminal, e.g., a portable, pocket-sized, handheld, computer-built or vehicle-mounted mobile device that is capable of exchanging language and/or data with the RAN. Examples of the wireless terminal include a personal communication service (PCS) phone, a cordless phone, a session initiated protocol (SIP) phone, a wireless local loop (WLL) station and a personal digital assistant (PDA). The wireless terminal may also be referred to as a system, a subscriber unit, a subscriber station, a mobile station, a mobile, a remote station, an access point, a remote terminal, an access terminal, a user terminal, a user agent, or a user device, which is not limited in the embodiments of the disclosure.

The network device involved in the embodiments of the disclosure may be a base station including a plurality of cells providing services to the terminal. Depending on the application scenario, the base station may be referred to as an access point or a device in the access network that communicates with the wireless terminal over one or more disk sectors on a radio interface, or by other names. The network device may exchange received radio frames with internet protocol (IP) packets, acting as a router between the wireless terminal and a remaining portion of the access network. The remaining portion of the access network includes an IP communication network. The network device may also be used for management coordination of attributes of the radio interface. For example, the network device involved in the embodiments of the disclosure may be a base transceiver station (BTS) in the GSM system or the CDMA system, a NodeB (NB) in the WCDMA system, an evolutional NB (eNB) in the LTE system, a 5G gNB in a next generation system, a home evolved NB (HeNB), a relay node, a femto, a pico, etc., which is not limited in the embodiments of the disclosure. In some network structures, the network device may include a centralized unit (CU) and a plurality of distributed units (DUs), and the CU and the DUs are geographically separated.

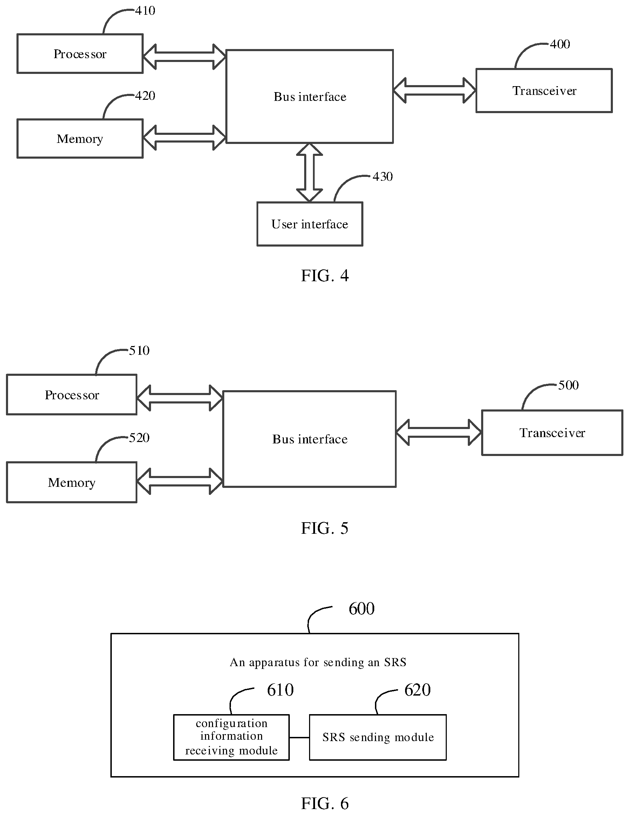

FIG. 4 is a schematic structural diagram of a terminal provided by an embodiment of the disclosure. As illustrated in FIG. 4, the terminal includes: a memory 420, a transceiver 400 and a processor 410.

The memory 420 is configured to store a computer program, the transceiver 400 is configured to send and receive data under the control of the processor 410, and the processor 410 is configured to read the computer program from the memory 420 and perform the following operations:

receiving configuration information sent by a network device;

determining a comb offset hopping subset and/or a cyclic shift hopping subset according to the configuration information, in which the comb offset hopping subset is dedicated for sending an SRS by adopting comb offset hopping, and the cyclic shift hopping subset is dedicated for sending an SRS by adopting cyclic shift hopping; and

sending the SRS by adopting comb offset hopping and/or cyclic shift hopping within the comb offset hopping subset and/or the cyclic shift hopping subset.

In detail, the transceiver 400 is also used to receive and send data under the control of processor 410.

In FIG. 4, a bus architecture may include any number of interconnected buses and bridges, specifically one or more processors represented by the processor 410 and various circuits of memories represented by the memory 420 are linked together. The bus architecture may also link peripheral devices, voltage regulators, and various other circuits such as power management circuits together, which are well known in the art and will not be further described herein. There is a bus interface that provides an interface. The transceiver 400 may include a plurality of components, such as a transmitter and a receiver, for providing units that can communicate with other devices over transmission mediums. The transmission mediums include wireless channels, wired channels, fiber optic cables, etc. For different UEs, a user interface 430 may also be an interface capable of externally and internally connecting desired devices. The connected devices include, but are not limited to, a keypad, a display, a speaker, a microphone, a joystick, and the like.

The processor 410 is responsible for managing the bus architecture and usual processing, and the memory 420 may store data used by the processor 410 in performing operations.

The processor 410 may be a central processing unit (CPU), an application specific integrated circuit (ASIC), a field-programmable gate array (FPGA), or a complex programmable logic device (CPLD). The processor may also adopt a multi-core architecture.

The processor executes any of the methods provided by the embodiments of the disclosure by calling the computer program stored in the memory to implement the obtained executable instructions. The processor and the memory may also be physically separated.

The configuration information is used to indicate at least one of the following:

frequency-domain resources in the comb offset hopping subset including a portion of all frequency-domain resources in an OFDM symbol where the SRS is;

cyclic shifts in the cyclic shift hopping subset including a portion of all cyclic shifts in an OFDM symbol where the SRS is;

the comb offset hopping subset including N frequency-domain resource position(s) in all frequency-domain resources, and N being an integer greater than 0 and less than a total number of frequency-domain positions in all the frequency-domain resources;

the cyclic shift hopping subset including M code-domain resource position(s) in all cyclic shifts, and M being an integer greater than 0 and less than a total number of cyclic shifts;

the comb offset hopping subset including the first P frequency-domain resource position(s) in all frequency-domain resources, and P being an integer greater than 0 and less than a total number of frequency-domain resources; or

the cyclic shift hopping subset including the first Q code-domain resource position(s) in all cyclic shifts, and Q being an integer greater than 0 and less than a total number of cyclic shifts.

The configuration information is indicated by an RRC parameter or a high-layer parameter.

The processor 410 is further configured to:

determine a frequency-domain starting position for sending the SRS within the comb offset hopping subset when the terminal adopts comb offset hopping; and

send the SRS at the frequency-domain starting position.

The processor 410 is further configured to:

obtain a comb hopping offset by converting a y-bit binary pseudorandom sequence corresponding to a moment t among SRS sequences into a decimal integer based on an index t of the OFDM symbol where the SRS is among a plurality of radio frames, in which y is an integer greater than or equal to 8; and

determine the frequency-domain starting position of the SRS based on the configuration information and the comb hopping offset.

The processor 410 is further configured to:

calculate the comb hopping offset $k_{comb,\ offset}^{subset}$ based on any one of the following:

$$k_{comb,\ offset}^{subset} = \left(\sum_{m=0}^{y-1} c(y*t+m)*2^m\right) mod N_{comb}^{subset};$$

$$k_{comb,\ offset}^{subset} = \left(\sum_{m=0}^{y-1} c(y*t+m)*2^m\right) mod\ K_{TC};$$

and

$$k_{comb,\ offset}^{subset} = \sum_{m=0}^{y-1} c(y*t+m)*2^m;$$

where $N_{comb}^{subset}$ represents a number of frequency-domain positions that are occupied by the terminal adopting comb offset hopping; $N_{comb}^{subset} \le K_{TC}$ ; $c(y*t+m)$ represents the y-bit binary pseudorandom sequence corresponding to the moment $t$ among the SRS sequences; $K_{TC}$ represents a comb value when mapping an SRS resource in the frequency domain; m represents an intermediate quantity used to calculate the comb hopping offset $k_{comb,\ offset}^{subset}$ ; and m ∈ [0, y-1].

The processor 410 is further configured to:

calculate a comb offset $k_{\mathrm{TC}}^{(p_i)}$ of an SRS port $P_i$ based on a comb offset configuration parameter $\bar{k}_{\mathrm{TC}}$;

calculate a frequency-domain position offset $\bar{k}_0^{(p_i)}$ of the SRS port $P_i$ based on the comb offset $k_{\mathrm{TC}}^{(p_i)}$ of the SRS port $P_i$ and the comb hopping offset $k_{comb,\ offset}^{subset}$; and

calculate the frequency-domain starting position of the SRS based on the $\bar{k}_0^{(p_i)}$.

The processor 410 is further configured to:

calculate the frequency-domain position offset $\bar{k}_0^{(p_i)}$ of the SRS port $P_i$ based on any one of the following:

$$\bar{k}_0^{(p_i)} = n_{shift}N_{sc}^{RB} + s\left(\left(k_{TC}^{(p_i)} + k_{offset}^{l'} + k_{comb,\ offset}^{subset}\right)\ mod N_{comb}^{subset}\right)\ ;$$

or

$$\bar{k}_0^{(p_i)} = n_{shift}N_{sc}^{RB} + \left(k_{TC}^{(p_i)} + k_{offset}^{l'} + s(k_{comb,\ offset}^{subset})\right)\ mod N_{comb}^{subset}\ ;$$

where $n_{shift}$ represents a preset threshold; $N_{sc}^{RB}$ represents a number of subcarriers per resource block (RB); $k_{\mathrm{TC}}^{(p_i)}\epsilon[0,\ \ K_{\mathrm{TC}}-1]$; $K_{TC}$ represents a comb value when mapping an SRS resource in the frequency domain; $k_{offset}^{l'}$ represents an offset during SRS positioning; $N_{comb}^{subset}$ represents a number of frequency-domain positions that are occupied by the terminal adopting comb offset hopping; $N_{comb}^{subset} \le K_{TC}$; $s(\cdot)$ is configured by the network device; and $s(\cdot)$ indicates a position to which the comb hopping offset is mapped when the terminal adopts comb offset hopping.

The processor 410 is further configured to:

determine a cyclic shift position for sending the SRS within the cyclic shift hopping subset when the terminal adopts cyclic shift hopping; and
send the SRS at the cyclic shift position.

The processor 410 is further configured to:

obtain a cyclic shift hopping offset by converting a y-bit binary pseudorandom sequence corresponding to a moment $t$ among SRS sequences into a decimal integer based on an index t of the OFDM symbol where the SRS is among a plurality of radio frames; and
determine the cyclic shift position of the SRS based on the configuration information and the cyclic shift hopping offset.

The processor 410 is further configured to:

calculate the cyclic shift hopping offset $n_{cs,\ offset}^{subset}$ based on any one of the following:

$$n_{cs,\ offset}^{subset} = \left(\textstyle\sum_{m=0}^{y-1} c(y*t+m)*2^m\right) mod N_{cs}^{subset};$$

$$n_{cs,\ offset}^{subset} = \left(\textstyle\sum_{m=0}^{y-1} c(y*t+m)*2^m\right) mod n_{\mathrm{SRS}}^{cs,\ max};$$

and

$$n^{subset}_{cs,\ offset} = \sum_{m=0}^{y-1} c(y * t + m) * 2^m;$$

where $N^{subset}_{cs}$ represents a number of frequency-domain positions that are occupied by the terminal adopting cyclic shift hopping; $N^{subset}_{cs} \le n^{cs,\ max}_{SRS}$; $n^{cs,\ max}_{SRS}$ represents the maximum cyclic shift hopping offset; $c(y * t + m)$ represents the y-bit binary pseudorandom sequence corresponding to the moment t among the SRS sequences; m represents an intermediate quantity used to calculate the comb hopping offset $k^{subset}_{comb,\ offset}$; and m $\in$ [0, y-1].

The processor 410 is further configured to:

calculate a code-domain offset $n^{cs,\ i}_{SRS}$ of an SRS port $P_i$ based on a cyclic shift configuration parameter $n^{cs}_{SRS}$;

calculate a cyclic shift $\alpha_i$ based on the code-domain offset $n^{cs,\ i}_{SRS}$ of the SRS port $P_i$ and the cyclic shift hopping offset $n^{subset}_{cs,\ offset}$; and

determine the cyclic shift position of the SRS based on the cyclic shift $\alpha_i$.

The processor 410 is further configured to:

calculate the cyclic shift $\alpha_i$ based on any one of the following:

$$\alpha_i = 2\pi \frac{s\left(\left(n^{cs,\ i}_{SRS} + n^{subset}_{cs,\ offset}\right) \mod N^{subset}_{cs}\right)}{n^{cs,\ max}_{SRS}};$$

or

$$\alpha_i = 2\pi \frac{\left(n^{cs,\ i}_{SRS} + s(n^{subset}_{cs,\ offset})\right) \mod N^{subset}_{cs}}{n^{cs,\ max}_{SRS}};$$

where $n^{cs,\ i}_{SRS}$ represents a code-domain offset of the SRS port $P_i$; $n^{cs,\ i}_{SRS} \in \left[0,\ n^{cs,\ max}_{SRS} - 1\right]$; $N^{subset}_{cs}$ represents a number of frequency-domain positions that are occupied by the terminal adopting cyclic shift hopping; $N^{subset}_{cs} \le n^{cs,\ max}_{SRS}$; $n^{cs,\ max}_{SRS}$; represents the maximum cyclic shift hopping offset; s($\cdot$) is configured by the network device; and s($\cdot$) indicates a position to which the cyclic shift hopping offset is mapped when the terminal adopts cyclic shift hopping.

When the terminal adopts comb offset hopping, the index t satisfies: $t$
$$= \begin{cases} \mathrm{mod}(SFN, N)N^{frame,\mu}_{slot}N^{slot}_{symb} + n^{\mu}_{s,f}N^{slot}_{symb} + l_0 + l', & \text{the comb offset hopping is performed every one OFDM symbol} \\ \mathrm{mod}(SFN, N)N^{frame,\mu}_{slot}N^{slot}_{symb} + n^{\mu}_{s,f}N^{slot}_{symb} + l_0 + \left\lfloor\frac{l'}{R}\right\rfloor R, & \text{the comb offset hopping is performed every R OFDM symbols} \end{cases}$$

where mod(SFN, N) represents an index of a current radio frame; $N^{frame,\ \mu}_{slot}$ represents a number of slots in a radio frame; $N^{slot}_{symb}$ represents a number of OFDM symbols in a slot; $N^{frame,\ \mu}_{slot}N^{slot}_{symb}$ represents a number of OFDM symbols in a radio frame; $n^{\mu}_{s,\ f}$ represents an index of a slot in a radio frame; $N^{slot}_{symb}$ represents a number of OFDM symbols in a slot; $n^{\mu}_{s,\ f} N^{slot}_{symb}$ represents a number of OFDM symbols before a slot occupied by the SRS; $l_0$ represents a starting OFDM symbol position of the SRS within a slot; $l'$ represents an index of a current OFDM symbol among OFDM symbols occupied by the SRS; $l' \in [0,$ a number of OFDM symbols occupied by the SRS-1]; and $R$ represents that the same SRS is sent over R OFDM symbols.

When the terminal adopts cyclic shift hopping, the index $t$ satisfies:

$$t = \mathrm{mod}\left(SFN,\ N\right)N^{\mathrm{frame},\ \mu}_{\mathrm{slot}} N^{slot}_{symb} + n^{\mu}_{s,\ f} N^{slot}_{symb} + l_0 + l';$$

where mod($SFN, N$) represents an index of a current radio frame; $N^{\mathrm{frame},\ \mu}_{\mathrm{slot}}$ represents a number of slots in a radio frame; $N^{slot}_{symb}$ represents a number of OFDM symbols in a slot; $N^{\mathrm{frame},\ \mu}_{\mathrm{slot}} N^{slot}_{symb}$ represents a number of OFDM symbols in a radio frame; $n^{\mu}_{s,\ f}$ represents an index of a slot in a radio frame; $N^{slot}_{symb}$ represents a number of OFDM symbols in a slot; $n^{\mu}_{s,\ f} N^{slot}_{symb}$ represents a number of OFDM symbols before a slot occupied by the SRS; $l_0$ represents a starting OFDM symbol position of the SRS within a slot; $l'$ represents an index of a current OFDM symbol among OFDM symbols occupied by the SRS; and $l' \in [0,$ a number of OFDM symbols occupied by the SRS-1].

It should be noted that the terminal provided in the embodiments of the disclosure can implement all the steps of the method in the method embodiments where the execution entity is the terminal, and achieve the same technical effects. Therefore, the contents and beneficial effects in the method embodiments that are the same as that in the embodiments related to the terminal will not be described in detail herein.

FIG. 5 is a schematic structural diagram of a network device provided by an embodiment of the disclosure. As illustrated in FIG. 5, the network device includes: a memory 520, a transceiver 500 and a processor 510.

The memory 520 is configured to store a computer program, the transceiver 500 is configured to send and receive data under the control of the processor 510, and the processor 510 is configured to read the computer program from the memory 520 and perform the following operations:

sending configuration information to a terminal, in which the configuration information is used for the terminal to determine a comb offset hopping subset and/or a cyclic shift hopping subset, the comb offset hopping subset is dedicated for sending an SRS by adopting comb offset hopping, and the cyclic shift hopping subset is dedicated for sending an SRS by adopting cyclic shift hopping.

In detail, the transceiver 500 is also used to receive and send data under the control of processor 510.

In FIG. 5, a bus architecture may include any number of interconnected buses and bridges, specifically one or more processors represented by the processor 510 and various circuits of memories represented by the memory 520 are linked together. The bus architecture may also link peripheral devices, voltage regulators, and various other circuits such as power management circuits together, which are well known in the art and will not be further described herein. There is a bus interface that provides an interface. The transceiver 500 may include a plurality of components, such as a transmitter and a receiver, for providing units that can communicate with other devices over transmission mediums. The transmission mediums include wireless channels, wired channels, fiber optic cables, etc. The processor 510 is responsible for managing the bus architecture and usual processing, and the memory 520 may store data used by the processor 510 in performing operations.

The processor 510 may be a CPU, an ASIC, a FPGA or a CPLD. The processor may also adopt a multi-core architecture.

The configuration information is used to indicate at least one of the following:

frequency-domain resources in the comb offset hopping subset including a portion of all frequency-domain resources in an OFDM symbol where the SRS is;

cyclic shifts in the cyclic shift hopping subset including a portion of all cyclic shifts in an OFDM symbol where the SRS is;

the comb offset hopping subset including N frequency-domain resource position(s) in all frequency-domain resources, and N being an integer greater than 0 and less than a total number of frequency-domain positions in all the frequency-domain resources;

the cyclic shift hopping subset including M code-domain resource position(s) in all cyclic shifts, and M being an integer greater than 0 and less than a total number of cyclic shifts;

the comb offset hopping subset including the first P frequency-domain resource position(s) in all frequency-domain resources, and P being an integer greater than 0 and less than a total number of frequency-domain resources; or the cyclic shift hopping subset including the first Q code-domain resource position(s) in all cyclic shifts, and Q being an integer greater than 0 and less than a total number of cyclic shifts.

The processor 510 is further configured to:
indicate the configuration information via an RRC parameter or a high-layer parameter.

It should be noted that the network device provided in the embodiments of the disclosure can implement all the steps of the method in the method embodiments where the execution entity is the network device, and achieve the same technical effects. Therefore, the contents and beneficial effects in the method embodiments that are the same as that in the embodiments related to the network device will not be described in detail herein.

FIG. 6 is a schematic structural diagram of an apparatus for sending an SRS provided by an embodiment of the disclosure. As illustrated in FIG. 6, the apparatus 600 for sending the SRS includes:

a configuration information receiving module 610, configured to receive configuration information sent by a network device, and determine a comb offset hopping subset and/or a cyclic shift hopping subset according to the configuration information, in which the comb offset hopping subset is dedicated for sending an SRS by adopting comb offset hopping, and the cyclic shift hopping subset is dedicated for sending an SRS by adopting cyclic shift hopping; and an SRS sending module 620, configured to send the SRS by adopting comb offset hopping and/or cyclic shift hopping within the comb offset hopping subset and/or the cyclic shift hopping subset.

The configuration information is used to indicate at least one of the following:

frequency-domain resources in the comb offset hopping subset including a portion of all frequency-domain resources in an OFDM symbol where the SRS is;
cyclic shifts in the cyclic shift hopping subset including a portion of all cyclic shifts in an OFDM symbol where the SRS is;
the comb offset hopping subset including N frequency-domain resource position(s) in all frequency-domain resources, and N being an integer greater than 0 and less than a total number of frequency-domain positions in all the frequency-domain resources;
the cyclic shift hopping subset including M code-domain resource position(s) in all cyclic shifts, and M being an integer greater than 0 and less than a total number of cyclic shifts;
the comb offset hopping subset including the first P frequency-domain resource position(s) in all frequency-domain resources, and P being an integer greater than 0 and less than a total number of frequency-domain resources; or
the cyclic shift hopping subset including the first Q code-domain resource position(s) in all cyclic shifts, and Q being an integer greater than 0 and less than a total number of cyclic shifts.

The configuration information is indicated by an RRC parameter or a high-layer parameter.

The SRS sending module 620 is further configured to:

determine a frequency-domain starting position for sending the SRS within the comb offset hopping subset when the terminal adopts comb offset hopping; and
send the SRS at the frequency-domain starting position.

The SRS sending module 620 is further configured to:

obtain a comb hopping offset by converting a y-bit binary pseudorandom sequence corresponding to a moment *t* among SRS sequences into a decimal integer based on an index t of the OFDM symbol where the SRS is among a plurality of radio frames, in which y is an integer greater than or equal to 8; and
determine the frequency-domain starting position of the SRS based on the configuration information and the comb hopping offset.

The SRS sending module 620 is further configured to:

calculate the comb hopping offset $k_{comb,\ offset}^{subset}$ based on any one of the following:

$$k_{comb,\ offset}^{subset} = \left( \sum_{m=0}^{y-1} c(y * t + m) * 2^m \right) mod N_{comb}^{subset};$$

$$k^{subset}_{comb,\ offset} = \left(\sum_{m=0}^{y-1} c(y * t + m) * 2^m\right) mod\ K_{TC};$$

and

$$k^{subset}_{comb,\ offset} = \sum_{m=0}^{y-1} c(y * t + m) * 2^m;$$

where $N^{subset}_{comb}$ represents a number of frequency-domain positions that are occupied by the terminal adopting comb offset hopping; $N^{subset}_{comb} \leq K_{TC}$ ; $c(y * t + m)$ represents the y-bit binary pseudorandom sequence corresponding to the moment $t$ among the SRS sequences; $K_{TC}$ represents a comb value when mapping an SRS resource in the frequency domain; m represents an intermediate quantity used to calculate the comb hopping offset $k^{subset}_{comb,\ offset}$ ; and m $\in$ [0, y-1].

The SRS sending module 620 is further configured to:

calculate a comb offset $k^{(p_i)}_{TC}$ of an SRS port $P_i$ based on a comb offset configuration parameter $\bar{k}_{TC}$;

calculate a frequency-domain position offset $\bar{k}^{(p_i)}_0$ of the SRS port $P_i$ based on the comb offset $k^{(p_i)}_{TC}$ of the SRS port $P_i$ and the comb hopping offset $k^{subset}_{comb,\ offset}$ ; and

calculate the frequency-domain starting position of the SRS based on the $\bar{k}^{(p_i)}_0$ .

The SRS sending module 620 is further configured to:

calculate the frequency-domain position offset $\bar{k}^{(p_i)}_0$ of the SRS port $P_i$ based on any one of the following:

$$\bar{k}^{(p_i)}_0 = n_{shift}N^{RB}_{sc} + s\left(\left(k^{(p_i)}_{TC} + k^{l'}_{offset} + k^{subset}_{comb,\ offset}\right) mod N^{subset}_{comb}\right) ;$$

or

$$\bar{k}^{(p_i)}_0 = n_{shift}N^{RB}_{sc} + \left(k^{(p_i)}_{TC} + k^{l'}_{offset} + s(k^{subset}_{comb,\ offset})\right) mod N^{subset}_{comb} ;$$

where $n_{shift}$ represents a preset threshold; $N^{RB}_{sc}$ represents a number of subcarriers per resource block (RB); $k^{(p_i)}_{TC}\epsilon[0,\ K_{TC} - 1]$ ; $K_{TC}$ represents a comb value when mapping an SRS resource in the frequency domain; $k^{l'}_{offset}$ represents an offset during SRS positioning; $N^{subset}_{comb}$ represents a number of frequency-domain positions that are occupied by the terminal adopting comb offset hopping; $N^{subset}_{comb} \leq K_{TC}$ ; $s(\cdot)$ is configured by the network device; and $s(\cdot)$ indicates a position to which the comb hopping offset is mapped when the terminal adopts comb offset hopping.

The SRS sending module 620 is further configured to:

determine a cyclic shift position for sending the SRS within the cyclic shift hopping subset when the terminal adopts cyclic shift hopping; and
send the SRS at the cyclic shift position.

The SRS sending module 620 is further configured to:

obtain a cyclic shift hopping offset by converting a y-bit binary pseudorandom sequence corresponding to a moment $t$ among SRS sequences into a decimal integer based on an index t of the OFDM symbol where the SRS is among a plurality of radio frames; and

determine the cyclic shift position of the SRS based on the configuration information and the cyclic shift hopping offset.

The SRS sending module 620 is further configured to:

calculate the cyclic shift hopping offset $n_{cs,\ offset}^{subset}$ based on any one of the following:

$$n_{cs,\ offset}^{subset} = \left(\sum_{m=0}^{y-1} c(y*t+m)*2^m\right) mod N_{cs}^{subset};$$

$$n_{cs,\ offset}^{subset} = \left(\sum_{m=0}^{y-1} c(y*t+m)*2^m\right) mod n_{SRS}^{cs,\ max};$$

and

$$n_{cs,\ offset}^{subset} = \sum_{m=0}^{y-1} c(y*t+m)*2^m;$$

where $N_{cs}^{subset}$ represents a number of frequency-domain positions that are occupied by the terminal adopting cyclic shift hopping; $N_{cs}^{subset} \le n_{SRS}^{cs,\ max}$; $n_{SRS}^{cs,\ max}$ represents the maximum cyclic shift hopping offset; $c(y*t+m)$ represents the y-bit binary pseudorandom sequence corresponding to the moment t among the SRS sequences; m represents an intermediate quantity used to calculate the comb hopping offset $k_{comb,\ offset}^{subset}$; and m $\in$ [0, y-1].

The SRS sending module 620 is further configured to:

calculate a code-domain offset $n_{SRS}^{cs,\ i}$ of an SRS port $P_i$ based on a cyclic shift configuration parameter $n_{SRS}^{cs}$;

calculate a cyclic shift $\alpha_i$ based on the code-domain offset $n_{SRS}^{cs,\ i}$ of the SRS port $P_i$ and the cyclic shift hopping offset $n_{cs,\ offset}^{subset}$; and

determine the cyclic shift position of the SRS based on the cyclic shift $\alpha_i$.

The SRS sending module 620 is further configured to:

calculate the cyclic shift $\alpha_i$ based on any one of the following:

$$\alpha_i = 2\pi \frac{s\left(\left(n_{SRS}^{cs,\ i} + n_{cs,\ offset}^{subset}\right) mod\ N_{cs}^{subset}\right)}{n_{SRS}^{cs,\ max}};$$

or

$$\alpha_i = 2\pi \frac{\left(n_{SRS}^{cs,\ i} + s(n_{cs,\ offset}^{subset})\right) mod\ N_{cs}^{subset}}{n_{SRS}^{cs,\ max}};$$

where $n_{SRS}^{cs,\ i}$ represents a code-domain offset of the SRS port $P_i$; $n_{SRS}^{cs,\ i} \in \left[0, n_{SRS}^{cs,\ max} - 1\right]$; $N_{cs}^{subset}$ represents a number of frequency-domain positions that are occupied by the terminal adopting cyclic shift hopping;

$$N_{cs}^{subset} \leq n_{\mathrm{SRS}}^{\mathrm{cs},\ \mathrm{max}}\ ;\ n_{\mathrm{SRS}}^{\mathrm{cs},\ \mathrm{max}}$$ represents the maximum cyclic shift hopping offset; $s(\cdot)$ is configured by the network device; and $s(\cdot)$ indicates a position to which the cyclic shift hopping offset is mapped when the terminal adopts cyclic shift hopping.

When the terminal adopts comb offset hopping, the index t satisfies:

$$t = \begin{cases} \mathrm{mod}(SFN, N)N_{slot}^{frame,\mu}N_{symb}^{slot}+n_{s,f}^{\mu}N_{symb}^{slot} + l_0 + l', & \text{the comb offset hopping is performed every one OFDM symbol} \\ \mathrm{mod}(SFN, N)N_{slot}^{frame,\mu}N_{symb}^{slot}+n_{s,f}^{\mu}N_{symb}^{slot} + l_0 + \left\lfloor \dfrac{l'}{R} \right\rfloor R, & \text{the comb offset hopping is performed every R OFDM symbols} \end{cases}$$

where $\mathrm{mod}(SFN, N)$ represents an index of a current radio frame; $N_{\mathrm{slot}}^{\mathrm{frame},\ \mu}$ represents a number of slots in a radio frame; $N_{symb}^{slot}$ represents a number of OFDM symbols in a slot; $N_{\mathrm{slot}}^{\mathrm{frame},\ \mu}N_{symb}^{slot}$ represents a number of OFDM symbols in a radio frame; $n_{s,\ f}^{\mu}$ represents an index of a slot in a radio frame; $N_{symb}^{slot}$ represents a number of OFDM symbols in a slot; $n_{s,\ f}^{\mu}N_{symb}^{slot}$ represents a number of OFDM symbols before a slot occupied by the SRS; $l_0$ represents a starting OFDM symbol position of the SRS within a slot; $l'$ represents an index of a current OFDM symbol among OFDM symbols occupied by the SRS; $l' \in [0$, a number of OFDM symbols occupied by the SRS-1]; and $R$ represents that the same SRS is sent over R OFDM symbols.

When the terminal adopts cyclic shift hopping, the index t satisfies:

$$t = \mathrm{mod}\left(SFN,\ N\right)N_{\mathrm{slot}}^{\mathrm{frame},\ \mu}N_{symb}^{slot}+n_{s,\ f}^{\mu}N_{symb}^{slot} + l_0 + l';$$

where $\mathrm{mod}(SFN, N)$ represents an index of a current radio frame; $N_{\mathrm{slot}}^{\mathrm{frame},\ \mu}$ represents a number of slots in a radio frame; $N_{symb}^{slot}$ represents a number of OFDM symbols in a slot; $N_{\mathrm{slot}}^{\mathrm{frame},\ \mu}N_{symb}^{slot}$ represents a number of OFDM symbols in a radio frame; $n_{s,\ f}^{\mu}$ represents an index of a slot in a radio frame; $N_{symb}^{slot}$ represents a number of OFDM symbols in a slot; $n_{s,\ f}^{\mu}N_{symb}^{slot}$ represents a number of OFDM symbols before a slot occupied by the SRS; $l_0$ represents a starting OFDM symbol position of the SRS within a slot; $l'$ represents an index of a current OFDM symbol among OFDM symbols occupied by the SRS; and $l' \in [0$, a number of OFDM symbols occupied by the SRS-1].

According to the apparatus for sending the SRS provided in the embodiments of the disclosure, the comb offset hopping subset and/or the cyclic shift hopping subset for the SRS may be configured, so that comb offset hopping and cyclic shift hopping of the SRS are limited to the respective subsets. The subsets do not include frequency-domain/code-domain resources that are occupied by UEs/SRSs not supporting comb offset hopping and/or cyclic shift hopping, and thus collisions between the SRS supporting comb offset hopping and/or cyclic shift hopping and the legacy SRS not supporting such techniques may be avoided, thereby improving SRS transmission performance.

It should be noted that the division of units in the embodiments of the disclosure is exemplary. The division is only based on logic functions, and there are other types of division methods in practical applications. The functional units in the embodiments of the disclosure may be integrated into a single processing unit or physically separated, or two or more units may be integrated into a single unit. The integrated unit described above may be implemented either in hardware or as software functional unit.

The integrated unit may be stored in a processor-readable storage medium if it is implemented in the form of software functional unit and sold or used as an independent product. Based on this understanding, the essence of the technical solution of the disclosure, a portion of the technical solution of the disclosure that contributes to related arts, or part or all of the technical solution of the disclosure may be embodied in the form of software product. The computer software product is stored in a storage medium and includes several instructions to cause a computer device (e.g., a personal computer, a server or a network device) or a processor to implement all or part of the steps of the method in the embodiments of the disclosure. The storage medium includes: an USB flash drive, a mobile hard drive, a read-only memory (ROM), a random access memory (RAM), a disk or a compact disc-ROM (CD-ROM), and other mediums that can be used to store program codes.

It should be noted that the apparatus provided in the embodiments of the disclosure is capable of performing the steps of the method provided by the above method embodiments and achieving the same technical effects. Therefore, the same contents and beneficial effects in the method embodiments will not be repeated in the embodiment.

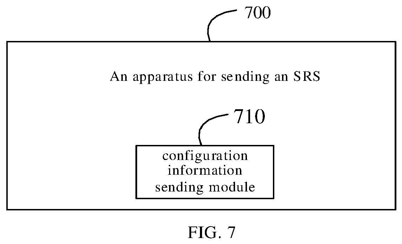

FIG. 7 is a schematic structural diagram of another apparatus for sending an SRS provided by an embodiment of the disclosure. As illustrated in FIG. 7, the apparatus 700 for sending the SRS includes:

a configuration information sending module 710, configured to send configuration information to a terminal, in which the configuration information is used for the terminal to determine a comb offset hopping subset and/or a cyclic shift hopping subset, the comb offset hopping subset is dedicated for sending an SRS by adopting comb offset hopping, and the cyclic shift hopping subset is dedicated for sending an SRS by adopting cyclic shift hopping.

The configuration information is used to indicate at least one of the following:

frequency-domain resources in the comb offset hopping subset including a portion of all frequency-domain resources in an OFDM symbol where the SRS is;

cyclic shifts in the cyclic shift hopping subset including a portion of all cyclic shifts in an OFDM symbol where the SRS is;

the comb offset hopping subset including N frequency-domain resource position(s) in all frequency-domain resources, and N being an integer greater than 0 and less than a total number of frequency-domain positions in all the frequency-domain resources;

the cyclic shift hopping subset including M code-domain resource position(s) in all cyclic shifts, and M being an integer greater than 0 and less than a total number of cyclic shifts;

the comb offset hopping subset including the first P frequency-domain resource position(s) in all frequency-domain resources, and P being an integer greater than 0 and less than a total number of frequency-domain resources; or

the cyclic shift hopping subset including the first Q code-domain resource position(s) in all cyclic shifts, and Q being an integer greater than 0 and less than a total number of cyclic shifts.

The configuration information sending module 710 is further configured to:
indicate the configuration information via an RRC parameter or a high-layer parameter.

According to the apparatus for sending the SRS provided in the embodiments of the disclosure, the comb offset hopping subset and/or the cyclic shift hopping subset for the SRS may be configured, so that comb offset hopping and cyclic shift hopping of the SRS are limited to the respective subsets. The subsets do not include frequency-domain/code-domain resources that are occupied by UEs/SRSs not supporting comb offset hopping and/or cyclic shift hopping, and thus collisions between the SRS supporting comb offset hopping and/or cyclic shift hopping and the legacy SRS not supporting such techniques may be avoided, thereby improving SRS transmission performance.

It should be noted that the division of units in the embodiments of the disclosure is exemplary. The division is only based on logic functions, and there are other types of division methods in practical applications. The functional units in the embodiments of the disclosure may be integrated into a single processing unit or physically separated, or two or more units may be integrated into a single unit. The integrated unit described above may be implemented either in hardware or as software functional unit.

The integrated unit may be stored in a processor-readable storage medium if it is implemented in the form of software functional unit and sold or used as an independent product. Based on this understanding, the essence of the technical solution of the disclosure, a portion of the technical solution of the disclosure that contributes to related arts, or part or all of the technical solution of the disclosure may be embodied in the form of software product. The computer software product is stored in a storage medium and includes several instructions to cause a computer device (e.g., a personal computer, a server or a network device) or a processor to implement all or part of the steps of the method in the embodiments of the disclosure. The storage medium includes: an USB flash drive, a mobile hard drive, an ROM, an RAM, a disk or a CD-ROM, and other mediums that can be used to store program codes.

It should be noted that the apparatus provided in the embodiments of the disclosure is capable of performing the steps of the method provided by the above method embodiments and achieving the same technical effects. Therefore, the same contents and beneficial effects in the method embodiments will not be repeated in the embodiment.

The embodiment of the disclosure also provides a processor-readable storage medium. The processor-readable storage medium stores a computer program, and the computer program is used to cause a processor to implement the method provided by the method embodiments described above.

It should be noted that the processor-readable storage medium may be any available medium or data storage device accessible by the processor. The medium includes, but is not limited to, a magnetic storage medium (e.g., a floppy disk, a hard disk, a magnetic tape, and a magneto-optical (MO) disk), an optical storage medium (e.g., a compact disc (CD), a digital versatile disc (DVD), a Blu-ray disc (BD) and a high-definition versatile disc (HVD)), and a semiconductor storage medium (e.g., an ROM, an erasable programmable read only memory (EPROM), an electrically EPROM (EEPROM), a NAND FLASH, and a solid-state drive (SSD)).

Those skilled in the art understand that the embodiments of the disclosure may be provided as a method, a system or a computer program product. Therefore, the disclosure may be implemented in the form of all hardware embodiments, all software embodiments, or a combination of hardware embodiments and software embodiments. Moreover, the disclosure may be implemented in the form of a computer program product embodied on one or more computer-usable storage mediums (including but not limited to a magnetic disk memory and an optical memory) containing computer usable program codes.

The disclosure is described with reference to flowcharts and/or block diagrams of the method, the apparatus (system) and the computer program product according to the embodiments of the disclosure. It should be understood that each process and/or block in the flowcharts and/or block diagrams, or any combination of processes and/or blocks in the flowcharts and/or block diagrams, can be implemented by computer-executable instructions. These computer-executable instructions are provided to a processor of a general-purpose computer, a dedicated computer, an embedded processor or a programmable data processing device to produce a machine, so that the instructions executed by the processor of the computer or the programmable data processing device can produce an apparatus for implementing functions specified in one or more processes in the flowcharts and/or one or more blocks in the block diagrams.

These processor-executable instructions may also be stored in a processor-readable memory that can direct a computer or other programmable data processing devices to operate in a specific way, so that the instructions stored in the processor-readable memory can produce an article containing command units used for implementing the functions specified in one or more processes in the flowcharts and/or one or more blocks in the block diagrams.

These processor-executable instructions may also be loaded onto a computer or other programmable data processing devices, so that a series of operation steps can be executed on the computer or other programmable devices to produce processes implementable by the computer. The instructions executed on the computer or the programmable devices provide steps for implementing the functions specified in one or more processes in the flowcharts and/or one or more blocks in the block diagrams.

Obviously, various changes and modifications made by those skilled in the field to the disclosure are within the spirit and scope of the disclosure. Since these changes and modifications to the disclosure fall within the scope of the claims of the disclosure and their equivalents, the disclosure is intended to include these changes and modifications.

**Claims**

1. A method for sending a sounding reference signal (SRS), applied to a terminal, comprising:

   receiving configuration information sent by a network device;
   determining a comb offset hopping subset and/or a cyclic shift hopping subset according to the configuration information, wherein the comb offset hopping subset is dedicated for sending an SRS by adopting comb offset hopping, and the cyclic shift hopping subset is dedicated for sending an SRS by adopting cyclic shift hopping; and
   sending the SRS by adopting comb offset hopping and/or cyclic shift hopping within the comb offset hopping subset and/or the cyclic shift hopping subset.

2. The method of claim 1, wherein the configuration information is used to indicate at least one of:

   frequency-domain resources in the comb offset hopping subset comprising a portion of all frequency-domain resources in an orthogonal frequency division multiplexing (OFDM) symbol where the SRS is;
   cyclic shifts in the cyclic shift hopping subset comprising a portion of all cyclic shifts in an OFDM symbol where the SRS is;
   the comb offset hopping subset comprising N frequency-domain resource position(s) in all frequency-domain resources, and N being an integer greater than 0 and less than a total number of frequency-domain positions in the all frequency-domain resources;
   the cyclic shift hopping subset comprising M code-domain resource position(s) in all cyclic shifts, and M being an integer greater than 0 and less than a total number of the all cyclic shifts;
   the comb offset hopping subset comprising first P frequency-domain resource position(s) in all frequency-domain resources, and P being an integer greater than 0 and less than a total number of the all frequency-domain resources; or
   the cyclic shift hopping subset comprising first Q code-domain resource position(s) in all cyclic shifts, and Q being an integer greater than 0 and less than a total number of the all cyclic shifts.

3. The method of claim 2, wherein the configuration information is indicated by a radio resource control (RRC) parameter or a high-layer parameter.

4. The method of any one of claims 1-3, wherein sending the SRS within the comb offset hopping subset, comprises:

   determining a frequency-domain starting position for sending the SRS within the comb offset hopping subset in a case that the terminal adopts comb offset hopping; and
   sending the SRS at the frequency-domain starting position.

5. The method of claim 4, wherein determining the frequency-domain starting position for sending the SRS within the comb offset hopping subset in a case that the terminal adopts comb offset hopping, comprises:

   obtaining a comb hopping offset by converting a y-bit binary pseudorandom sequence corresponding to a moment t among SRS sequences into a decimal integer based on an index t of the OFDM symbol where the SRS is among a plurality of radio frames, wherein y is an integer greater than or equal to 8; and
   determining the frequency-domain starting position of the SRS based on the configuration information and the comb hopping offset.

6. The method of claim 5, wherein obtaining the comb hopping offset by converting the y-bit binary pseudorandom sequence corresponding to the moment t among the SRS sequences into the decimal integer, comprises:

   calculating the comb hopping offset $k_{comb,\ offset}^{subset}$ based on any one of:

   $$k_{comb,\ offset}^{subset} = \left(\sum_{m=0}^{y-1} c(y * t + m) * 2^m\right) mod N_{comb}^{subset};$$

   $$k_{comb,\ offset}^{subset} = \left(\sum_{m=0}^{y-1} c(y * t + m) * 2^m\right) mod\ K_{TC};$$

   and

   $$k_{comb,\ offset}^{subset} = \sum_{m=0}^{y-1} c(y * t + m) * 2^m;$$

   wherein $N_{comb}^{subset}$ represents a number of frequency-domain positions that are occupied by the terminal adopting comb offset hopping; $N_{comb}^{subset} \leq K_{TC}$ ; c(y * t + m) represents the y-bit binary pseudorandom sequence corresponding to the moment t among the SRS sequences; $K_{TC}$ represents a comb value in a case of mapping an SRS resource in the frequency domain; m represents an intermediate quantity used to calculate the comb hopping offset $k_{comb,\ offset}^{subset}$ ; and m∈[0, y-1].

7. The method of claim 5, wherein determining the frequency-domain starting position of the SRS based on the configuration information and the comb hopping offset, comprises:

   obtaining a comb offset $k_{TC}^{(p_i)}$ of an SRS port $P_i$ by calculating based on a comb offset configuration parameter $\bar{k}_{TC}$;
   obtaining a frequency-domain position offset $\bar{k}_0^{(p_i)}$ of the SRS port $P_i$ by calculating based on the comb offset $k_{TC}^{(p_i)}$ of the SRS port $P_i$ and the comb hopping offset $k_{comb,\ offset}^{subset}$ ; and
   obtaining the frequency-domain starting position of the SRS by calculating based on the $\bar{k}_0^{(p_i)}$ .

8. The method of claim 7, wherein obtaining the frequency-domain position offset $\bar{k}_0^{(p_i)}$ of the SRS port $P_i$ by

calculating based on the comb offset $k_{\mathrm{TC}}^{(p_i)}$ of the SRS port $P_i$ and the comb hopping offset $k_{comb,\ offset}^{subset}$, comprises:

obtaining the frequency-domain position offset $\bar{k}_0^{(p_i)}$ of the SRS port $P_i$ by calculating based on any one of:

$$\bar{k}_0^{(p_i)} = n_{shift}N_{sc}^{RB} + s\left(\left(k_{TC}^{(p_i)} + k_{offset}^{l'} + k_{comb,\ offset}^{subset}\right) modN_{comb}^{subset}\right)\ ;$$

or

$$\bar{k}_0^{(p_i)} = n_{shift}N_{sc}^{RB} + \left(k_{TC}^{(p_i)} + k_{offset}^{l'} + s(k_{comb,\ offset}^{subset})\right) modN_{comb}^{subset}\ ;$$

wherein $n_{shift}$ represents a preset threshold; $N_{sc}^{RB}$ represents a number of subcarriers per resource block (RB); $k_{\mathrm{TC}}^{(p_i)} \epsilon [0,\ \ K_{\mathrm{TC}} - 1]$; $K_{TC}$ represents a comb value in a case of mapping an SRS resource in the frequency domain; $k_{offset}^{l'}$ represents an offset during SRS positioning; $N_{comb}^{subset}$ represents a number of frequency-domain positions that are occupied by the terminal adopting comb offset hopping; $N_{comb}^{subset} \leq K_{TC}$; $s(\cdot)$ is configured by the network device; and $s(\cdot)$ indicates a position to which the comb hopping offset is mapped in a case that the terminal adopts comb offset hopping.

9. The method of any one of claims 1-4, wherein sending the SRS within the cyclic shift hopping subset, comprises:

   determining a cyclic shift position for sending the SRS within the cyclic shift hopping subset in a case that the terminal adopts cyclic shift hopping; and
   sending the SRS at the cyclic shift position.

10. The method of claim 9, wherein determining the cyclic shift position for sending the SRS within the cyclic shift hopping subset in a case that the terminal adopts cyclic shift hopping, comprises:

    obtaining a cyclic shift hopping offset by converting a y-bit binary pseudorandom sequence corresponding to a moment t among SRS sequences into a decimal integer based on an index t of the OFDM symbol where the SRS is among a plurality of radio frames; and
    determining the cyclic shift position of the SRS based on the configuration information and the cyclic shift hopping offset.

11. The method of claim 10, wherein obtaining the cyclic shift hopping offset by converting the y-bit binary pseudorandom sequence corresponding to the moment t among the SRS sequences into the decimal integer, comprises:

    calculating the cyclic shift hopping offset $n_{cs,\ offset}^{subset}$ based on any one of:

$$n_{cs,\ offset}^{subset} = \left(\sum_{m=0}^{y-1} c(y*t+m)*2^m\right) modN_{cs}^{subset};$$

$$n_{cs,\ offset}^{subset} = \left(\sum_{m=0}^{y-1} c(y*t+m)*2^m\right) modn_{\mathrm{SRS}}^{cs,\ max};$$

and

$$n_{cs,\ offset}^{subset} = \sum_{m=0}^{y-1} c(y*t+m)*2^m;$$

wherein $N_{cs}^{subset}$ represents a number of frequency-domain positions that are occupied by the terminal adopting cyclic shift hopping; $N_{cs}^{subset} \leq n_{\mathrm{SRS}}^{\mathrm{cs,\ max}}$; $n_{\mathrm{SRS}}^{\mathrm{cs,\ max}}$ represents a maximum cyclic shift hopping offset; $c(y * t + m)$ represents the y-bit binary pseudorandom sequence corresponding to the moment t among the SRS sequences; m represents an intermediate quantity used to calculate the comb hopping offset $k_{comb,\ offset}^{subset}$; and m$\in$[0,y-1].

12. The method of claim 10, wherein determining the cyclic shift position of the SRS based on the configuration information and the cyclic shift hopping offset, comprises:

   obtaining a code-domain offset $n_{\mathrm{SRS}}^{\mathrm{cs,\ }i}$ of an SRS port $P_i$ by calculating based on a cyclic shift configuration parameter $n_{\mathrm{SRS}}^{\mathrm{cs}}$;

   obtaining a cyclic shift $\alpha_i$ by calculating based on the code-domain offset $n_{\mathrm{SRS}}^{\mathrm{cs,\ }i}$ of the SRS port $P_i$ and the cyclic shift hopping offset $n_{cs,\ offset}^{subset}$; and

   determining the cyclic shift position of the SRS based on the cyclic shift $\alpha_i$.

13. The method of claim 12, wherein obtaining the cyclic shift $\alpha_i$ by calculating based on the code-domain offset $n_{\mathrm{SRS}}^{\mathrm{cs,\ }i}$ of the SRS port $P_i$ and the cyclic shift hopping offset $n_{cs,\ offset}^{subset}$, comprises:

   calculating the cyclic shift $\alpha_i$ based on any one of:

$$\alpha_i = 2\pi \frac{s\left(\left(n_{\mathrm{SRS}}^{\mathrm{cs,\ }i} + n_{cs,\ offset}^{subset}\right) \bmod N_{cs}^{subset}\right)}{n_{\mathrm{SRS}}^{\mathrm{cs,\ max}}};$$

   or

$$\alpha_i = 2\pi \frac{\left(n_{\mathrm{SRS}}^{\mathrm{cs,\ }i} + s(n_{cs,\ offset}^{subset})\right) \bmod N_{cs}^{subset}}{n_{\mathrm{SRS}}^{\mathrm{cs,\ max}}};$$

   wherein $n_{\mathrm{SRS}}^{\mathrm{cs,\ }i}$ represents a code-domain offset of the SRS port $P_i$; $n_{\mathrm{SRS}}^{\mathrm{cs,\ }i} \in \left[0, n_{\mathrm{SRS}}^{\mathrm{cs,\ max}} - 1\right]$;

   $N_{cs}^{subset}$ represents a number of frequency-domain positions that are occupied by the terminal adopting cyclic shift hopping; $N_{cs}^{subset} \leq n_{\mathrm{SRS}}^{\mathrm{cs,\ max}}$; $n_{\mathrm{SRS}}^{\mathrm{cs,\ max}}$ represents a maximum cyclic shift hopping offset; $s(\cdot)$ is configured by the network device; and $s(\cdot)$ indicates a position to which the cyclic shift hopping offset is mapped in a case that the terminal adopts cyclic shift hopping.

14. The method of claim 5 or 6, wherein in a case that the terminal adopts comb offset hopping, the index t satisfies:

$$t = \begin{cases} \mathrm{mod}(SFN, N)N_{slot}^{frame,\mu}N_{symb}^{slot} + n_{s,f}^{\mu}N_{symb}^{slot} + l_0 + l', & \text{the comb offset hopping is performed every one OFDM symbol} \\ \mathrm{mod}(SFN, N)N_{slot}^{frame,\mu}N_{symb}^{slot} + n_{s,f}^{\mu}N_{symb}^{slot} + l_0 + \left\lfloor \frac{l'}{R} \right\rfloor R, & \text{the comb offset hopping is performed every R OFDM symbols} \end{cases}$$

   wherein mod(SFN, N) represents an index of a current radio frame; $N_{slot}^{frame,\ \mu}$ represents a number of slots in a radio frame; $N_{symb}^{slot}$ represents a number of OFDM symbols in a slot; $N_{\text{slot}}^{\text{frame, } \mu} N_{symb}^{slot}$ represents a number of OFDM symbols in a radio frame; $n_{s,\ f}^{\mu}$ represents an index of a slot in a radio frame; $N_{symb}^{slot}$ represents a number of OFDM symbols in a slot; $n_{s,\ f}^{\mu} N_{symb}^{slot}$ represents a number of OFDM symbols before a slot occupied by the SRS; $l_0$ represents a starting OFDM symbol position of the SRS within a slot; $l'$ represents an index of a current OFDM symbol among OFDM symbols occupied by the SRS; $l' \in$ [0, a number of OFDM symbols occupied by the SRS-1]; and $R$ represents that the same SRS is sent over R OFDM symbols.

15. The method of claim 10 or 11, wherein in a case that the terminal adopts cyclic shift hopping, the index $t$ satisfies:

$$\text{t} = \text{mod}\big(SFN,\ N\big)N_{\text{slot}}^{\text{frame, } \mu} N_{symb}^{slot} + n_{s,\ f}^{\mu} N_{symb}^{slot} + l_0 + l';$$

wherein $mod(SFN, N)$ represents an index of a current radio frame; $N_{\text{slot}}^{\text{frame, } \mu}$ represents a number of slots in a radio frame; $N_{symb}^{slot}$ represents a number of OFDM symbols in a slot; $N_{\text{slot}}^{\text{frame, } \mu} N_{symb}^{slot}$ represents a number of OFDM symbols in a radio frame; $n_{s,\ f}^{\mu}$ represents an index of a slot in a radio frame; $N_{symb}^{slot}$ represents a number of OFDM symbols in a slot; $n_{s,\ f}^{\mu} N_{symb}^{slot}$ represents a number of OFDM symbols before a slot occupied by the SRS; $l_0$ represents a starting OFDM symbol position of the SRS within a slot; $l'$ represents an index of a current OFDM symbol among OFDM symbols occupied by the SRS; and $l' \in$ [0, a number of OFDM symbols occupied by the SRS-1].

16. A method for sending a sounding reference signal (SRS), applied to a network device, comprising:
sending configuration information to a terminal, wherein the configuration information is used for the terminal to determine a comb offset hopping subset and/or a cyclic shift hopping subset, the comb offset hopping subset is dedicated for sending an SRS by adopting comb offset hopping, and the cyclic shift hopping subset is dedicated for sending an SRS by adopting cyclic shift hopping.

17. The method of claim 16, wherein the configuration information is used to indicate at least one of:

frequency-domain resources in the comb offset hopping subset comprising a portion of all frequency-domain resources in an orthogonal frequency division multiplexing (OFDM) symbol where the SRS is;
cyclic shifts in the cyclic shift hopping subset comprising a portion of all cyclic shifts in an OFDM symbol where the SRS is;
the comb offset hopping subset comprising N frequency-domain resource position(s) in all frequency-domain resources, and N being an integer greater than 0 and less than a total number of frequency-domain positions in the all frequency-domain resources;
the cyclic shift hopping subset comprising M code-domain resource position(s) in all cyclic shifts, and M being an integer greater than 0 and less than a total number of the all cyclic shifts;
the comb offset hopping subset comprising first P frequency-domain resource position(s) in all frequency-domain resources, and P being an integer greater than 0 and less than a total number of the all frequency-domain resources; or
the cyclic shift hopping subset comprising first Q code-domain resource position(s) in all cyclic shifts, and Q being an integer greater than 0 and less than a total number of the all cyclic shifts.

18. The method of claim 16 or 17, wherein sending the configuration information to the terminal, comprises:
indicating the configuration information via a radio resource control (RRC) parameter or a high-layer parameter.

19. A terminal, comprising a memory, a transceiver and a processor; wherein
the memory is configured to store a computer program, the transceiver is configured to send and receive data under the control of the processor, and the processor is configured to read the computer program from the memory and perform the following operations:

receiving configuration information sent by a network device;
determining a comb offset hopping subset and/or a cyclic shift hopping subset according to the configuration information, wherein the comb offset hopping subset is dedicated for sending an SRS by adopting comb offset hopping, and the cyclic shift hopping subset is dedicated for sending an SRS by adopting cyclic shift hopping; and
sending the SRS by adopting comb offset hopping and/or cyclic shift hopping within the comb offset hopping subset and/or the cyclic shift hopping subset.

20. The terminal of claim 19, wherein the configuration information is used to indicate at least one of the following:

frequency-domain resources in the comb offset hopping subset comprising a portion of all frequency-domain resources in an orthogonal frequency division multiplexing (OFDM) symbol where the SRS is;
cyclic shifts in the cyclic shift hopping subset comprising a portion of all cyclic shifts in an OFDM symbol where the SRS is;
the comb offset hopping subset comprising N frequency-domain resource position(s) in all frequency-domain resources, and N being an integer greater than 0 and less than a total number of frequency-domain positions in the all frequency-domain resources;
the cyclic shift hopping subset comprising M code-domain resource position(s) in all cyclic shifts, and M being an integer greater than 0 and less than a total number of the all cyclic shifts;
the comb offset hopping subset comprising first P frequency-domain resource position(s) in all frequency-domain resources, and P being an integer greater than 0 and less than a total number of the all frequency-domain resources; or
the cyclic shift hopping subset comprising first Q code-domain resource position(s) in all cyclic shifts, and Q being an integer greater than 0 and less than a total number of the all cyclic shifts.

21. The terminal of claim 20, wherein the configuration information is indicated by a radio resource control (RRC) parameter or a high-layer parameter.

22. The terminal of any one of claims 19-21, wherein sending the SRS within the comb offset hopping subset, comprises:

determining a frequency-domain starting position for sending the SRS within the comb offset hopping subset in a case that the terminal adopts comb offset hopping; and
sending the SRS at the frequency-domain starting position.

23. The terminal of claim 22, wherein determining the frequency-domain starting position for sending the SRS within the comb offset hopping subset in a case that the terminal adopts comb offset hopping, comprises:

obtaining a comb hopping offset by converting a y-bit binary pseudorandom sequence corresponding to a moment $t$ among SRS sequences into a decimal integer based on an index t of the OFDM symbol where the SRS is among a plurality of radio frames, wherein y is an integer greater than or equal to 8; and
determining the frequency-domain starting position of the SRS based on the configuration information and the comb hopping offset.

24. The terminal of claim 23, wherein obtaining the comb hopping offset by converting the y-bit binary pseudorandom sequence corresponding to the moment $t$ among the SRS sequences into the decimal integer, comprises:

calculating the comb hopping offset $k_{comb,\ offset}^{subset}$ based on any one of:

$$k_{comb,\ offset}^{subset} = \left(\sum_{m=0}^{y-1} c(y*t+m)*2^m\right) mod N_{comb}^{subset};$$

$$k_{comb,\ offset}^{subset} = \left(\sum_{m=0}^{y-1} c(y*t+m)*2^m\right) mod K_{TC};$$

and

$$k^{subset}_{comb,\ offset} = \sum_{m=0}^{y-1} c(y * t + m) * 2^m;$$

wherein $N^{subset}_{comb}$ represents a number of frequency-domain positions that are occupied by the terminal adopting comb offset hopping; $N^{subset}_{comb} \le K_{TC}$ ; c(y * t + m) represents the y-bit binary pseudorandom sequence corresponding to the moment t among the SRS sequences; $K_{TC}$ represents a comb value in a case of mapping an SRS resource in the frequency domain; m represents an intermediate quantity used to calculate the comb hopping offset $k^{subset}_{comb,\ offset}$ ; and m∈[0, y-1].

25. The terminal of claim 23, wherein determining the frequency-domain starting position of the SRS based on the configuration information and the comb hopping offset, comprises:

obtaining a comb offset $k^{(p_i)}_{TC}$ of an SRS port $P_i$ by calculating based on a comb offset configuration parameter $\bar{k}_{TC}$;

obtaining a frequency-domain position offset $\bar{k}^{(p_i)}_0$ of the SRS port $P_i$ by calculating based on the comb offset $k^{(p_i)}_{TC}$ of the SRS port $P_i$ and the comb hopping offset $k^{subset}_{comb,\ offset}$ ; and

obtaining the frequency-domain starting position of the SRS by calculating based on the $\bar{k}^{(p_i)}_0$ .

26. The terminal of claim 25, wherein obtaining the frequency-domain position offset $\bar{k}^{(p_i)}_0$ of the SRS port $P_i$ by calculating based on the comb offset $k^{(p_i)}_{TC}$ of the SRS port $P_i$ and the comb hopping offset $k^{subset}_{comb,\ offset}$ , comprises:

calculating the frequency-domain position offset $\bar{k}^{(p_i)}_0$ of the SRS port $P_i$ based on any one of:

$$\bar{k}^{(p_i)}_0 = n_{shift}N^{RB}_{sc} + s\left(\left(k^{(p_i)}_{TC} + k^{l'}_{offset} + k^{subset}_{comb,\ offset}\right) modN^{subset}_{comb}\right) \ ;$$

or

$$\bar{k}^{(p_i)}_0 = n_{shift}N^{RB}_{sc} + \left(k^{(p_i)}_{TC} + k^{l'}_{offset} + s(k^{subset}_{comb,\ offset})\right) modN^{subset}_{comb} \ ;$$

wherein $n_{shift}$ represents a preset threshold; $N^{RB}_{sc}$ represents a number of subcarriers per resource block (RB) ; $k^{(p_i)}_{TC} \epsilon [0,\ K_{TC} - 1]$ ; $K_{TC}$ represents a comb value in a case of mapping an SRS resource in the frequency domain; $k^{l'}_{offset}$ represents an offset during SRS positioning; $N^{subset}_{comb}$ represents a number of frequency-domain positions that are occupied by the terminal adopting comb offset hopping; $N^{subset}_{comb} \le K_{TC}$ ; s(·) is configured by the network device; and s(·) indicates a position to which the comb hopping offset is mapped in a case that the terminal adopts comb offset hopping.

27. The terminal of any one of claims 19-22, wherein sending the SRS within the cyclic shift hopping subset, comprises:

determining a cyclic shift position for sending the SRS within the cyclic shift hopping subset in a case that the terminal adopts cyclic shift hopping; and
sending the SRS at the cyclic shift position.

**28.** The terminal of claim 27, wherein determining the cyclic shift position for sending the SRS within the cyclic shift hopping subset in a case that the terminal adopts cyclic shift hopping, comprises:

obtaining a cyclic shift hopping offset by converting a y-bit binary pseudorandom sequence corresponding to a moment *t* among SRS sequences into a decimal integer based on an index t of the OFDM symbol where the SRS is among a plurality of radio frames; and
determining the cyclic shift position of the SRS based on the configuration information and the cyclic shift hopping offset.

**29.** The terminal of claim 28, wherein obtaining the cyclic shift hopping offset by converting the y-bit binary pseudorandom sequence corresponding to the moment *t* among the SRS sequences into the decimal integer, comprises:

calculating the cyclic shift hopping offset $n_{cs,\ offset}^{subset}$ based on any one of:

$$n_{cs,\ offset}^{subset} = \left(\sum_{m=0}^{y-1} c(y*t+m)*2^m\right) mod N_{cs}^{subset};$$

$$n_{cs,\ offset}^{subset} = \left(\sum_{m=0}^{y-1} c(y*t+m)*2^m\right) mod n_{SRS}^{cs,\ max};$$

and

$$n_{cs,\ offset}^{subset} = \sum_{m=0}^{y-1} c(y*t+m)*2^m;$$

wherein $N_{cs}^{subset}$ represents a number of frequency-domain positions that are occupied by the terminal adopting cyclic shift hopping; $N_{cs}^{subset} \leq n_{SRS}^{cs,\ max}$; $n_{SRS}^{cs,\ max}$ represents a maximum cyclic shift hopping offset; $c(y*t+m)$ represents the y-bit binary pseudorandom sequence corresponding to the moment *t* among the SRS sequences; m represents an intermediate quantity used to calculate the comb hopping offset $k_{comb,\ offset}^{subset}$; and m∈{0,y-1]

**30.** The terminal of claim 28, wherein determining the cyclic shift position of the SRS based on the configuration information and the cyclic shift hopping offset, comprises:

obtaining a code-domain offset $n_{SRS}^{cs,\ i}$ of an SRS port $P_i$ by calculating based on a cyclic shift configuration parameter $n_{SRS}^{cs}$;

obtaining a cyclic shift $\alpha_i$ by calculating based on the code-domain offset $n_{SRS}^{cs,\ i}$ of the SRS port $P_i$ and the cyclic shift hopping offset $n_{cs,\ offset}^{subset}$; and
determining the cyclic shift position of the SRS based on the cyclic shift $\alpha_i$.

**31.** The terminal of claim 30, wherein obtaining the cyclic shift $\alpha_i$ by calculating based on the code-domain offset $n_{SRS}^{cs,\ i}$ of the SRS port $P_i$ and the cyclic shift hopping offset $n_{cs,\ offset}^{subset}$, comprises:

calculating the cyclic shift $\alpha_i$ based on any one of:

$$\alpha_i = 2\pi \frac{s\left(\left(n_{SRS}^{cs,\ i} + n_{cs,\ offset}^{subset}\right) mod\ N_{cs}^{subset}\right)}{n_{SRS}^{cs,\ max}};$$

or

$$\alpha_i = 2\pi \frac{\left(n_{\mathrm{SRS}}^{\mathrm{cs},\ i} + s(n_{cs,\ offset}^{subset})\right) \bmod N_{cs}^{subset})}{n_{\mathrm{SRS}}^{\mathrm{cs},\ \max}};$$

wherein $n_{\mathrm{SRS}}^{\mathrm{cs},\ i}$ represents a code-domain offset of the SRS port $P_i$; $n_{\mathrm{SRS}}^{\mathrm{cs},\ i} \in \left[0,\ n_{\mathrm{SRS}}^{\mathrm{cs},\ \max} - 1\right]$;

$N_{cs}^{subset}$ represents a number of frequency-domain positions that are occupied by the terminal adopting cyclic shift hopping; $N_{cs}^{subset} \le n_{\mathrm{SRS}}^{\mathrm{cs},\ \max}$; $n_{\mathrm{SRS}}^{\mathrm{cs},\ \max}$ represents a maximum cyclic shift hopping offset; $s(\cdot)$ is configured by the network device; and $s(\cdot)$ indicates a position to which the cyclic shift hopping offset is mapped in a case that the terminal adopts cyclic shift hopping.

32. The terminal of claim 23 or 24, wherein in a case that the terminal adopts comb offset hopping, the index t satisfies:

$$t = \begin{cases} \mathrm{mod}(SFN, N)N_{slot}^{frame,\mu}N_{symb}^{slot} + n_{s,f}^{\mu}N_{symb}^{slot} + l_0 + l', & \text{the comb offset hopping is performed every one OFDM symbol} \\ \mathrm{mod}(SFN, N)N_{slot}^{frame,\mu}N_{symb}^{slot} + n_{s,f}^{\mu}N_{symb}^{slot} + l_0 + \left\lfloor \frac{l'}{R} \right\rfloor R, & \text{the comb offset hopping is performed every R OFDM symbols} \end{cases}$$

wherein $mod(SFN, N)$ represents an index of a current radio frame; $N_{\mathrm{slot}}^{\mathrm{frame},\ \mu}$ represents a number of slots in a radio frame; $N_{symb}^{slot}$ represents a number of OFDM symbols in a slot; $N_{\mathrm{slot}}^{\mathrm{frame},\ \mu}N_{symb}^{slot}$ represents a number of OFDM symbols in a radio frame; $n_{s,\ f}^{\mu}$ represents an index of a slot in a radio frame; $N_{symb}^{slot}$ represents a number of OFDM symbols in a slot; $n_{s,\ f}^{\mu}N_{symb}^{slot}$ represents a number of OFDM symbols before a slot occupied by the SRS; $l_0$ represents a starting OFDM symbol position of the SRS within a slot; $l'$ represents an index of a current OFDM symbol among OFDM symbols occupied by the SRS; $l' \in [0,$ a number of OFDM symbols occupied by the SRS-1]; and R represents that the same SRS is sent over R OFDM symbols.

33. The terminal of claim 28 or 29, wherein in a case that the terminal adopts cyclic shift hopping, the index *t* satisfies:

$$t = \mathrm{mod}(SFN,\ N)N_{\mathrm{slot}}^{\mathrm{frame},\ \mu}N_{symb}^{slot} + n_{s,\ f}^{\mu}N_{symb}^{slot} + l_0 + l';$$

wherein $mod(SFN, N)$ represents an index of a current radio frame; $N_{\mathrm{slot}}^{\mathrm{frame},\ \mu}$ represents a number of slots in a radio frame; $N_{symb}^{slot}$ represents a number of OFDM symbols in a slot; $N_{\mathrm{slot}}^{\mathrm{frame},\ \mu}N_{symb}^{slot}$ represents a number of OFDM symbols in a radio frame; $n_{s,\ f}^{\mu}$ represents an index of a slot in a radio frame; $N_{symb}^{slot}$ represents a number of OFDM symbols in a slot; $n_{s,\ f}^{\mu}N_{symb}^{slot}$ represents a number of OFDM symbols before a slot occupied by the SRS; $l_0$ represents a starting OFDM symbol position of the SRS within a slot; $l'$ represents an index of a current OFDM symbol among OFDM symbols occupied by the SRS; and $l' \in [0,$ a number of OFDM symbols occupied by the SRS-1].

34. A network device, comprising a memory, a transceiver and a processor; wherein
the memory is configured to store a computer program, the transceiver is configured to send and receive data under the control of the processor, and the processor is configured to read the computer program from the memory and perform the following operations:
sending configuration information to a terminal, wherein the configuration information is used for the terminal to determine a comb offset hopping subset and/or a cyclic shift hopping subset, the comb offset hopping subset is dedicated for sending an SRS by adopting comb offset hopping, and the cyclic shift hopping subset is dedicated for sending an SRS by adopting cyclic shift hopping.

35. The network device of claim 34, wherein the configuration information is used to indicate at least one of:

frequency-domain resources in the comb offset hopping subset comprising a portion of all frequency-domain resources in an orthogonal frequency division multiplexing (OFDM) symbol where the SRS is;
cyclic shifts in the cyclic shift hopping subset comprising a portion of all cyclic shifts in an OFDM symbol where the SRS is;
the comb offset hopping subset comprising N frequency-domain resource position(s) in all frequency-domain resources, and N being an integer greater than 0 and less than a total number of frequency-domain positions in the all frequency-domain resources;
the cyclic shift hopping subset comprising M code-domain resource position(s) in all cyclic shifts, and M being an integer greater than 0 and less than a total number of the all cyclic shifts;
the comb offset hopping subset comprising first P frequency-domain resource position(s) in all frequency-domain resources, and P being an integer greater than 0 and less than a total number of the all frequency-domain resources; or
the cyclic shift hopping subset comprising first Q code-domain resource position(s) in all cyclic shifts, and Q being an integer greater than 0 and less than a total number of the all cyclic shifts.

36. The network device of claim 34 or 35, wherein sending the configuration information to the terminal, comprises:
indicating the configuration information via a radio resource control (RRC) parameter or a high-layer parameter.

37. An apparatus for sending a sounding reference signal (SRS), comprising:

a configuration information receiving module, configured to receive configuration information sent by a network device, and determine a comb offset hopping subset and/or a cyclic shift hopping subset according to the configuration information, wherein the comb offset hopping subset is dedicated for sending an SRS by adopting comb offset hopping, and the cyclic shift hopping subset is dedicated for sending an SRS by adopting cyclic shift hopping; and
an SRS sending module, configured to send the SRS by adopting comb offset hopping and/or cyclic shift hopping within the comb offset hopping subset and/or the cyclic shift hopping subset.

38. An apparatus for sending a sounding reference signal (SRS), comprising:
a configuration information sending module, configured to send configuration information to a terminal, wherein the configuration information is used for the terminal to determine a comb offset hopping subset and/or a cyclic shift hopping subset, the comb offset hopping subset is dedicated for sending an SRS by adopting comb offset hopping, and the cyclic shift hopping subset is dedicated for sending an SRS by adopting cyclic shift hopping.

39. A processor-readable storage medium, wherein the processor-readable storage medium stores a computer program, and the computer program is used to cause a processor to implement the method according to any one of claims 1-15.

40. A processor-readable storage medium, wherein the processor-readable storage medium stores a computer program, and the computer program is used to cause a processor to implement the method according to any one of claims 16-18.

SRS resource 1

SRS resource 2

SRS resource 3

SRS pilot mapping region

FIG. 1

Receive configuration information sent by a network device, and determine a comb offset hopping subset and/or a cyclic shift hopping subset according to the configuration information, in which the comb offset hopping subset is dedicated for sending an SRS by adopting comb offset hopping, and the cyclic shift hopping subset is dedicated for sending an SRS by adopting cyclic shift hopping

200

Send the SRS by adopting comb offset hopping and/or cyclic shift hopping within the comb offset hopping subset and/or the cyclic shift hopping subset

210

FIG. 2

Send configuration information to a terminal, in which the configuration information is used for the terminal to determine a comb offset hopping subset and/or a cyclic shift hopping subset, the comb offset hopping subset is dedicated for sending an SRS by adopting comb offset hopping, and the cyclic shift hopping subset is dedicated for sending an SRS by adopting cyclic shift hopping

300

FIG. 3

FIG. 4

FIG. 5

FIG. 6

700

An apparatus for sending an SRS

710

configuration
information
sending module

FIG. 7

## INTERNATIONAL SEARCH REPORT

| International application No. |
| --- |
| **PCT/CN2024/103379** |

**A.    CLASSIFICATION OF SUBJECT MATTER**

H04L 5/00(2006.01)i

According to International Patent Classification (IPC) or to both national classification and IPC

**B.    FIELDS SEARCHED**

Minimum documentation searched (classification system followed by classification symbols)

IPC: H04L, H04W

Documentation searched other than minimum documentation to the extent that such documents are included in the fields searched

Electronic data base consulted during the international search (name of data base and, where practicable, search terms used)

3GPP, CNTXT, ENTXTC, DWPI, CNKI, ENTXT, WPABS: 探测参考信号, SRS, 梳状偏移, 循环移位, 跳频, 碰撞, 配置信息, 资源, 集合, 子集, 专用, 仅用于, 无线资源控制, RRC, 起始位置, comb offset, cyclic shift, hopping, collision, configuration information, resource, set, subset, dedicated, only for, start location

**C.    DOCUMENTS CONSIDERED TO BE RELEVANT**

| Category* | Citation of document, with indication, where appropriate, of the relevant passages | Relevant to claim No. |
| --- | --- | --- |
| X | US 2021036825 A1 (LG ELECTRONICS INC.) 04 February 2021 (2021-02-04) description, paragraphs 0015, 0158, and 0299-0300, and figure 15 | 1-4, 9, 16-22, 27, 34-40 |
| X | LENOVO. "Discussion of SRS Enhancement" *3GPP TSG RAN WG1 #111, R1-2211294,* 18 November 2022 (2022-11-18), section 2.2.1 | 1-4, 9, 16-22, 27, 34-40 |
| X | GOOGLE. "On SRS Enhancement" *3GPP TSG RAN WG1 #111, R1-2211120,* 18 November 2022 (2022-11-18), section 2.3 | 1-4, 9, 16-22, 27, 34-40 |
| A | US 2023179365 A1 (QUALCOMM INC.) 08 June 2023 (2023-06-08) entire document | 1-40 |

☐ Further documents are listed in the continuation of Box C.          ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **10 October 2024** | **16 October 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/103379**

| Patent document cited in search report | | | Publication date (day/month/year) | Patent family member(s) | | | Publication date (day/month/year) |
|---|---|---|---|---|---|---|---|
| US | 2021036825 | A1 | 04 February 2021 | WO | 2019147045 | A1 | 01 August 2019 |
| US | 2023179365 | A1 | 08 June 2023 | WO | 2023107201 | A1 | 15 June 2023 |
| | | | | KR | 20240116714 | A | 30 July 2024 |
| | | | | IN | 202427028206 | A | 21 June 2024 |
| | | | | CN | 118339796 | A | 12 July 2024 |

Form PCT/ISA/210 (patent family annex) (July 2022)

**REFERENCES CITED IN THE DESCRIPTION**

**Patent documents cited in the description**

- CN 202311017443